# EUROPÄISCHE PATENTSCHRIFT

(11) **EP 0 632 551 B1**
(45) Veröffentlichungstag und Bekanntmachung des Hinweises auf die Patenterteilung: **21.10.1998**
(21) Anmeldenummer: 94110179.2
(22) Anmeldetag: 30.06.1994
(51) Int. Cl.: H01S 3/042, H01S 3/06, H01S 3/094, H01S 3/23, H01S 3/081, H01S 3/07, H01S 3/106, H01S 3/109

(54) **Laserverstärkersystem**
Laser amplifier system
Système amplificateur laser

(30) Priorität: 02.07.1993 DE 4322094; 23.12.1993 DE 4344227
(43) Veröffentlichungstag der Anmeldung: 04.01.1995
(60) Teilanmeldung: 98108000.5
(73) Patentinhaber: Deutsches Zentrum für Luft- und Raumfahrt e.V., 53175 Bonn (DE); UNIVERSITÄT STUTTGART INSTITUT FÜR STRAHLWERKZEUGE, 70569 Stuttgart (DE)
(72) Erfinder: Brauch, Uwe, Dr., D-70565 Stuttgart (DE); Giesen, Adolf, Dr. rer. nat., D-71272 Renningen (DE); Voss, Andreas, Dipl.-Phys., D-70174 Stuttgart (DE); Wittig, Klaus, Dipl.-Phys., D-70439 Stuttgart (DE)
(74) Vertreter: Hoeger, Stellrecht & Partner

(56) Entgegenhaltungen:
- US-A- 4 949 346
- OPTICS LETTERS., Bd.16, Nr.6, 15. März 1991, NEW YORK US Seiten 396 - 398 J.P.CUTHBERTSON ET AL. 'PUMP-RESONANT EXCITATION OF THE 946-NM Nd:YAG LASER'
- IEEE JOURNAL OF QUANTUM ELECTRONICS., Bd.24, Nr.11, November 1988, NEW YORK US Seiten 2238 - 2242 J.C.LEE ET AL. 'GAIN SQUARING IN A Cr:Nd:GSGG ACTIVE-MIRROR AMPLIFIER USING A CHOLESTERIC LIQUID CRYSTAL MIRROR'

## Beschreibung

Die Erfindung betrifft ein Laserverstärkersystem mit einem in einem Laserstrahlungsfeld angeordneten Festkörper, welcher ein laseraktives Material umfaßt, und mit einer Pumplichtquelle zum Pumpen des laseraktiven Materials.

Bei derartigen Laserverstärkersystemen besteht generell das Problem, möglichst hohe Leistungen bei möglichst geringem Kristallvolumen zu erreichen.

Diese Aufgabe wird bei einem Laserverstärkersystem der eingangs beschriebenen Art erfindungsgemäß dadurch gelöst, daß der Festkörper eine Kühloberfläche aufweist, daß der Festkörper über die Kühloberfläche die in diesem entstehende Wärme flächenhaft auf ein massives Kühlelement ableitet, so daß in dem Festkörper ein Temperaturgradient in Richtung auf die Kühloberfläche entsteht, daß das massive Kühlelement einen Träger für den Festkörper bildet und daß das Laserstrahlungsfeld sich ungefähr parallel zu dem Temperaturgradienten im Festkörper ausbreitet.

Der Vorteil der erfindungsgemäßen Lösung ist darin zu sehen, daß bei dieser der Festkörper mit hoher Pumpleistung gepumpt werden kann, da die dabei entstehende Wärme über die Kühloberfläche auf das massive Kühlelement abführbar ist, wobei gleichzeitig der dabei entstehende Temperaturgradient im Festkörper nicht zu einer negativen Beeinflussung der Strahlqualität des Laserstrahlungsfeldes bei hohen Pumpleistungen führt, da sich das Laserstrahlungsfeld ungefähr parallel zum Temperaturgradienten im Festkörper ausbreitet, so daß das Laserstrahlungsfeld in allen Querschnittsbereichen denselben Temperaturgradienten "sieht".

Unter einem massiven Kühlelement wird dabei ein als fester Körper ausgebildetes Kühlelement verstanden, wobei dieses Kühlelement auch aus mehreren Materialien aufgebaut sein kann.

Besonders vorteilhaft ist es dabei, wenn das Kühlelement aus einem Material mit einer Wärmeleitfähigkeit hergestellt ist, welche größer als die Wärmeleitfähigkeit des Festkörpers ist. Damit ist sichergestellt, daß das Kühlelement die von dem Festkörper in dieses eintretende Wärme "schneller" abführt als sie durch die Wärmeleitfähigkeit des Festkörpers diesem zugeführt wird und insbesondere die Temperaturdifferenz innerhalb des Kühlelements und damit zwischen dem Festkörper und beispielsweise einem Kühlmedium gering bleibt.

Um in dem Kühlelement keinen Wärmestau im Bereich nahe des Festkörpers auftreten zu lassen, ist es ferner besonders vorteilhaft, wenn das Kühlelement in einen an den Festkörper angrenzenden Bereich senkrecht zur Kühloberfläche eine Dicke aufweist, welche größer ist als der Quotient aus der Fläche der Kühloberfläche dividiert durch deren Umfang. Damit steht innerhalb des massiven Kühlelements eine ausreichend große Querschnittsfläche für den wirksamen Abtransport der von dem Festkörper in das Kühlelement eintretenden Wärme zur Verfügung.

Um die von dem Festkörper kommende Wärme möglichst schnell verteilen zu können, ist es ferner vorteilhaft, wenn das Kühlelement eine Trägerfläche für den Festkörper aufweist, welche größer als die Kühloberfläche ist, so daß in möglichst direktem Anschluß an die Kühloberfläche eine Verteilung der von dem Festkörper kommenden Wärme auf eine möglichst große Querschnittsfläche erfolgt.

Hinsichtlich der Art der Ausbildung der Kühlfläche wurden im Zusammenhang mit der Erläuterung der bisherigen Ausführungsbeispiele keine näheren Angaben gemacht. So sieht ein vorteilhaftes Ausführungsbeispiel vor, daß die Kühloberfläche in einer ersten Richtung eine Dimension aufweist, die größer ist als eine senkrecht zur Kühloberfläche gemessene Dicke des Festkörpers.

Noch vorteilhafter ist es, wenn der Festkörper plättchenförmig ausgebildet ist und mit mindestens einer Plättchenober- oder -unterseite als Kühloberfläche auf dem Kühlelement aufliegt.

Die flächenhafte Wärmeleitung von dem Festkörper auf das Kühlelement könnte beispielsweise über nebeneinanderliegende Teilflächenbereiche der Kühloberfläche erfolgen. Besonders vorteilhaft ist es, wenn der Festkörper die in diesem entstehende Wärme von der Kühloberfläche vollflächig auf das Kühlelement ableitet.

Hinsichtlich der Ausbildung des Kühlelements und des weiteren Abtransports der Wärme von dem Kühlelement wurden im Zusammenhang mit der bisherigen Erläuterung einzelner Ausführungsbeispiele keine näheren Angaben gemacht. So sieht ein vorteilhaftes Ausführungsbeispiel vor, daß das Kühlelement eine von einem Kühlmedium kontaktierte wärmeabgebende Fläche aufweist, welche ein Vielfaches der Fläche der Kühloberfläche beträgt.

Dies läßt sich besonders vorteilhaft dann realisieren, wenn das Kühlelement mit Kühlkanälen durchsetzt ist, deren Wandflächen die wärmeabgebende Fläche bilden.

Hinsichtlich des Materials des Kühlelements wurden bislang keine näheren Angaben gemacht. So sieht ein vorteilhaftes Ausführungsbeispiel vor, daß das Kühlelement für das Laserstrahlungsfeld transparent ausgebildet ist.

Bei diesem Ausführungsbeispiel besteht beispielsweise die Möglichkeit, das Kühlelement und den Festkörper so anzuordnen, daß beide in einer Richtung quer zur Kühloberfläche von dem Laserstrahlungsfeld durchsetzt sind.

Diese Lösung läßt sich insbesondere zur Erzielung hoher Leistungen dahingehend erweitern, daß das Laserstrahlungsfeld eine Vielzahl aufeinanderfolgender Festkörper durchsetzt und daß jeweils zwischen den aufeinanderfolgenden Festkörpern ein Kühlelement angeordnet ist.

Eine besonders vorteilhafte Leistungsausbeute läßt sich bei einem Laser der erfindungsgemäßen Art dann erreichen, wenn auf der Seite des Festkörpers, auf welcher dieser die Kühloberfläche trägt, ein Reflektor für das Laserstrahlungsfeld angeordnet ist. Dieser Reflektor für das Laserstrahlungsfeld schafft die Möglichkeit, daß das Laserstrahlungsfeld den Festkörper mehrfach durchsetzt und somit eine bessere Verstärkung erhältlich ist.

Besonders vorteilhaft läßt sich dies mit dem erfindungsgemäß vorgesehenen Kühlelement dann kombinieren, wenn der Festkörper mit der Kühloberfläche an dem Reflektor für das Laserstrahlungsfeld vollflächig anliegt und insbesondere der Reflektor von dem Kühlelement umfaßt ist. Vorzugsweise ist dabei der Reflektor so ausgebildet, daß über den Reflektor eine flächenhafte Wärmeeinleitung in einen Kühlkörper des Kühlelements erfolgt.

Ein besonders zweckmäßiges Ausführungsbeispiel sieht dabei vor, daß der Reflektor eine auf die Kühloberfläche aufgetragene Reflektorschicht ist, so daß diese Reflektorschicht sehr dünn ist und vorzugsweise durch diese dünne Reflektorschicht hindurch eine effiziente Wärmeleitung auf den Kühlkörper des Kühlelements erfolgen kann.

Bei den Ausführungsbeispielen des erfindungsgemäßen Laserverstärkersystems, bei welchen ein Reflektor vorgesehen ist, ist dieses zweckmäßigerweise so konzipiert, daß das Laserstrahlungsfeld von einer der Kühloberfläche gegenüberliegenden Oberfläche des Festkörpers in diesen eintritt.

Hinsichtlich der Einkopplung des Pumplichts in den Festkörper wurde im Zusammenhang mit der bisherigen Beschreibung der Ausführungsbeispiele keine näheren Angaben gemacht.

So sieht ein besonders vorteilhaftes Ausführungsbeispiel vor, daß der Festkörper mindestens eine quer zur Kühloberfläche verlaufende Seitenfläche aufweist, über welche eine Einkopplung des Pumplichts erfolgt.

Die Einkopplung des Pumplichts kann grundsätzlich in beliebiger Art und Weise erfolgen. Besonders vorteilhaft ist es jedoch, wenn das Pumplicht in dem Festkörper durch Reflexion geführt ist, so daß eine möglichst gleichmäßige Anregung des laseraktiven Materials im Festkörper erfolgt.

Die Anregung des laseraktiven Materials im Festkörper läßt sich besonders gleichmäßig und vorteilhaft dann erreichen, wenn das Pumplicht in dem Festkörper ungefähr parallel zur Kühloberfläche geführt ist.

Eine besonders zweckmäßige Lösung sieht dabei vor, daß das Pumplicht in dem Festkörper durch die Kühloberfläche und eine der Kühloberfläche gegenüberliegende Oberfläche geführt ist.

Besonders zweckmäßig ist eine Führung des Pumplichts durch Totalreflexion. Die Führung des Pumplichts durch Totalreflexion tritt stets dann ein, wenn die Divergenz des Pumplichts im Festkörper derart ist, daß das Pumplicht im Festkörper mit einem Winkel kleiner als dem Grenzwinkel der Totalreflexion auf die das Pumplicht führenden Flächen auftrifft.

Eine derartige Anpassung der Divergenz läßt sich dabei durch geeignete Abbildungssysteme für die Abbildung des Pumplichts auf den Festkörper erreichen.

Besonders vorteilhaft ist es, insbesondere um eine möglichst gute und gleichmäßige Anregung im Festkörper zu erhalten, wenn die Divergenz des Pumplichts im Festkörper so groß ist, daß das Pumplicht mit einem Winkel nahe dem Grenzwinkel der Totalreflexion auf die dieses führenden Oberflächen des Festkörpers auftrifft.

Eine derartige Führung des Pumplichts kann entweder durch Totalreflexion erfolgen oder durch eine zusätzliche reflektierende Beschichtung der Kühloberfläche und der dieser gegenüberliegenden Oberfläche, wobei diese Beschichtung vorzugsweise so sein muß, daß mindestens eine derselben für das Laserstrahlungsfeld transparent ist.

Alternativ zur Einkopplung des Pumplichts über eine Seitenfläche sieht ein weiteres vorteilhaftes Ausführungsbeispiel vor, daß die Einkopplung des Pumplichts über eine der Kühloberfläche gegenüberliegende Oberfläche erfolgt.

Vorzugsweise ist dabei auf der Seite des Festkörpers, auf welcher die Kühloberfläche liegt, ein Reflektor für das Pumplicht vorgesehen.

Besonders zweckmäßig ist es dabei, wenn der Festkörper mit der Kühloberfläche an dem Reflektor für das Pumplicht vollflächig anliegt und der Reflektor von dem Kühlelement umfaßt ist, so daß insbesondere über den Reflektor eine flächenhafte Wärmeeinleitung in einen Kühlkörper des Kühlmediums erfolgt.

Im einfachsten Fall ist dabei der Reflektor als Reflektorschicht auf dem Festkörper angeordnet.

Ein besonders vorteilhaftes Ausführungsbeispiel sieht vor, daß der Reflektor für das Laserstrahlungsfeld und der Reflektor für das Pumplicht miteinander identisch sind, das heißt, daß der Reflektor sowohl das Laserstrahlungsfeld als auch das Pumplicht reflektiert.

Um ein möglichst effektives Pumpen des laseraktiven Materials in dem Festkörper zu erreichen, ist vorgesehen, daß das Pumplicht den Festkörper mindestens zweifach durchsetzt. Dies ist beispielsweise durch einen vorstehend genannten Reflektor erreichbar.

Noch optimaler ist es, wenn das Pumplicht den Festkörper mehr als zweifach durchsetzt. Beispielsweise ist eine vierfache Durchstrahlung des Festkörpers dann möglich, wenn der vom Reflektor reflektierte Pumplichtstrahl wiederum durch einen Spiegel in den Festkörper zurück auf den Reflektor reflektiert wird.

Hinsichtlich der Ausbildungen des Reflektors, sei es als Reflektor für das Laserstrahlungsfeld oder als Reflektor für das Pumplicht wurden keine weiteren spezifischen Angaben gemacht. So sieht ein vorteilhaftes Ausführungsbeispiel vor, daß der Reflektor durch eine unmittelbar auf der Kühloberfläche des Festkörpers aufgebrachte hochreflektierende Reflektorschicht gebildet ist.

Um eine gute Wärmeleitung von der Reflektorschicht auf den Kühlkörper zu erhalten, ist vorteilhafterweise vorgesehen, daß auf der dem Festkörper gegenüberliegenden Seite der Reflektorschicht eine Metallisierung aufgebracht ist, welche insbesondere das Herstellen eines möglichst guten Wärmekontakts zwischen der Reflektorschicht und dem Kühlkörper erlaubt.

Vorzugsweise ist dabei die Metallisierung mit flächenhaftem Wärmekontakt mit dem Kühlkörper verbunden.

Dies ist insbesondere dadurch möglich, daß die Metallisierung mittels eines weichen Metalls mit dem Kühlkörper verbunden ist, wobei das weiche Metall beispielsweise ein weiches Lot oder Indium sein kann.

Bei einem derartig ausgebildeten Ausführungsbeispiel umfaßt in diesem Fall das Kühlelement sowohl den Kühlkörper als auch das weiche Metall zur Verbindung des Kühlkörpers mit der Metallisierung, außerdem die Metallisierung und auch die Reflektorschicht, da alle diese Komponenten die Wärme flächenhaft von dem Festkörper ableiten.

Hinsichtlich der Führung des Pumplichts wurde im Zusammenhang mit den vorstehend beschriebenen Ausführungsbeispielen lediglich die Führung desselben durch Reflexion, vorzugsweise parallel zur Kühloberfläche oder senkrecht dazu beschrieben.

Ein besonders vorteilhaftes Ausführungsbeispiel der erfindungsgemäßen Lösung sieht vor, daß das Laserverstärkersystem in Ebenen parallel zur Kühloberfläche für ein Laserstrahlungsfeld resonatorfrei ausgebildet ist, um das Ausbilden eines Laserstrahlungsfeldes parallel zur Kühloberfläche zu verhindern.

Dies ist beispielsweise dadurch möglich, daß angrenzend an die Seitenflächen ein brechungsindexadaptierendes Material vorgesehen ist. Dadurch erfolgt an den Seitenflächen keine Totalreflexion sondern ein Übergang von sich ausbildender Laserstrahlung in das brechungsindexadaptierende Material, von welchem ausgehend eine Rückreflexion zur Ausbildung einer Resonatorgeometrie unwahrscheinlich ist.

Alternativ dazu sieht ein vorteilhaftes Ausführungsbeispiel vor, daß der Festkörper einen von dem Pumplicht gepumpten Innenbereich und einen nicht gepumpten Außenbereich aufweist.

Ein weiteres vorteilhaftes Ausführungsbeispiel sieht vor, daß der Festkörper einen das laseraktive Material aufweisenden Innenbereich und einen von laseraktivem Material freien Außenbereich aufweist.

Vorzugsweise ist dabei der Außenbereich so ausgebildet, daß er denselben Brechungsindex wie der Innenbereich aufweist. Dies läßt sich am einfachsten dadurch erreichen, daß der Außenbereich und der Innenbereich aus demselben Festkörpermaterial sind.

Insbesondere ist eine derartige Konfiguration dann besonders einfach herstellbar, wenn der Außenbereich und der Innenbereich durch Bonden miteinander verbunden sind.

Hinsichtlich der Ausbildung der Pumplichtquellen wurden im Zusammenhang mit der bisherigen Erläuterung einzelner Ausführungsbeispiele keine weiteren Angaben gemacht.

So sieht ein besonders vorteilhaftes Ausführungsbeispiel vor, daß die Pumplichtquelle eine oder mehrere Laser- oder Superstrahlungsdioden umfaßt. Derartige Laser- oder Superstrahlungsdioden haben den Vorteil, daß sie sehr kompakt sind und Pumplicht mit hoher Leistungsdichte bereitstellen und zugleich eine Wellenlänge aufweisen, die bei hoher Absorption zu einer möglichst geringen Wärmeentwicklung im Festkörper führt.

Vorzugsweise wird dabei das Pumplicht der Laser- oder Superstrahlungsdiode mit einem Lichtleiter, vorzugsweise einer optischen Faser, zum Festkörper geführt.

Im einfachsten Fall endet der Lichtleiter mit seinem festkörpernahen Ende an einer Seitenfläche des Festkörpers, wobei der Lichtleiter mit diesem Ende an der Seitenfläche anliegen oder in geringem Abstand von dieser angeordnet sein kann.

Beispielsweise ist durch Variation des Abstandes zwischen der Seitenfläche und dem festkörpernahen Ende des Lichtleiters eine optimale Einkopplung des Pumplichts in den Festkörper einstellbar, und zwar beispielsweise so, daß das Pumplicht in dem Festkörper durch Reflexion geführt wird.

Die Einkopplung des Pumplichts in den Festkörper läßt sich ferner noch dadurch verbessern, daß alternativ oder ergänzend zum Vorsehen eines Lichtleiters noch eine Abbildungsoptik zwischen der Pumplichtquelle und dem Festkörper vorgesehen ist. Die Abbildungsoptik könnte beispielsweise eine Linse zwischen jeder Pumplichtquelle und dem Festkörper sein.

Insbesondere im Fall eines kreisscheibenförmigen Festkörpers hat es sich als besonders vorteilhaft erwiesen, wenn die Abbildungsoptik eine Ringlinse umfaßt.

Eine alternative Lösung für die Linse in der Abbildungsoptik sieht vor, daß die Abbildungsoptik einen Reflektor umfaßt, wobei der Reflektor entweder eine ebene oder eine gekrümmte Oberfläche aufweist.

Vorzugsweise ist im Fall einer kreisrunden Scheibe des Festkörpers ein um den Festkörper herum verlaufender Reflektorring vorgesehen.

Um ferner auch noch möglichst reflexionsfreie Verhältnisse beim Eintritt des Pumplichts in den Festkörper zu erhalten, ist vorzugsweise vorgesehen, daß die vom Pumplicht durchsetzte Oberfläche des Festkörpers mit einer Antireflexbeschichtung versehen ist.

Ferner ist um ebenfalls eine möglichst reflexionsfreie Einkopplung des Laserstrahlungsfeldes in dem Festkörper zu erhalten vorteilhafterweise vorgesehen, daß die von dem Laserstrahlungsfeld durchsetzte Oberfläche des Festkörpers mit einer Antireflexbeschichtung versehen ist.

Um zu hohen Laserleistungen zu kommen ist es erforderlich, das Laserstrahlungsfeld so zu führen, daß dieses mehrere der erfindungsgemäßen Festkörper in ihrer erfindungsgemäßen Anordnung durchsetzt.

Aus diesem Grund ist bei einer bevorzugten Lösung vorgesehen, daß in dem Laserverstärkersystem das Laserstrahlungsfeld mehreren Reflexionen unterworfen ist und daß im Bereich von mehreren dieser Reflexionen ein Festkörper angeordnet ist.

Eine besonders einfache Lösung sieht dabei vor, daß die Reflexionen jeweils an einem Reflektor erfolgen, welcher von einem Kühlelement für den jeweiligen Festkörper umfaßt ist.

Vorzugsweise erfolgt dabei eine Führung des Laserstrahlungsfeldes in dem Laserverstärkersystem zickzackförmig zwischen einander gegenüberliegend angeordneten erfindungsgemäßen Festkörpern.

Im Zusammenhang mit den bisher beschriebenen Laserverstärkersystemen wurde ferner nicht im einzelnen auf den Einsatz derartiger Laserverstärkersysteme eingegangen. So sieht eine vorteilhafte Einsatzmöglichkeit eines erfindungsgemäßen Laserverstärkersystems vor, daß dieses als Verstärker für ankommende Laserstrahlung dient.

Eine alternative oder ergänzende Möglichkeit sieht vor, daß das erfindungsgemäße Laserverstärkersystem mit einem Resonator zu einem Lasersystem kombiniert ist, wobei ein derartiges Lasersystem ebenfalls einen gefalteten Strahlungsverlauf umfassen kann.

Alternativ zu einem gefalteten Strahlungsverlauf ist es vorteilhaft, Resonatoren mit einem ringförmigen Strahlungsverlauf, sogenannte Ringresonatoren vorzusehen, wobei jeweils an einer oder mehreren Reflexionen des Laserstrahlungsfeldes ein erfindungsgemäßer Festkörper angeordnet ist.

Um zu besonders hohen Leistungen zu kommen, sieht ein im Rahmen der Erfindung besonders vorteilhafte Konfiguration vor, daß das erfindungsgemäße Laserverstärkersystem sowohl Teil eines Lasersystems als auch Teil eines diesem Lasersystem nachgeordneten Laserverstärkers ist.

Hinsichtlich der Ausbildung des Temperaturgradienten im Festkörper wurden bislang keine näheren Angaben gemacht. So sieht ein besonders vorteilhaftes Ausführungsbeispiel vor, daß der Temperaturgradient im Festkörper in dem vom Laserstrahlungsfeld durchsetzten Bereich quer zur Ausbreitungsrichtung des Laserstrahlungsfeldes im wesentlichen konstant ist, um jegliche negativen Auswirkungen eines unterschiedlichen Temperaturgradienten und somit einer dadurch bedingten unterschiedlichen optischen Dichte auf das Laserstrahlungsfeld zu vermeiden.

Noch vorteilhafter ist es, wenn der Temperaturgradient im Festkörper in dem vom Pumplicht durchsetzten Bereich quer zur Ausbreitungsrichtung des Laserstrahlungsfeldes im wesentlichen konstant ist. Dabei ist der vom Pumplicht durchsetzte Bereich des Festkörpers vorzugsweise gleich groß oder größer als der vom Laserstrahlungsfeld durchsetzte Bereich, so daß damit zwangsläufig auch in dem vom Laserstrahlungsfeld durchsetzten Bereich sichergestellt ist, daß der Temperaturgradient im Festkörper quer zum Laserstrahlungsfeld über dessen Erstreckung im wesentlichen konstant ist.

Vorzugsweise ist dabei ein derartiger Temperaturgradient dadurch erreichbar, daß der Festkörper im vom Laserstrahlungsfeld durchsetzten Bereich zu der Kühloberfläche im wesentlichen parallel verlaufende Isothermen aufweist.

Ein vorstehend erläuterter konstanter Temperaturgradient und/oder ein vorstehend erläuterter Verlauf der Isothermen lassen sich insbesondere dann erreichen, wenn das Pumplicht über den jeweiligen sich quer zur Ausbreitungsrichtung des Laserstrahlungsfeldes erstreckenden Bereich eine im wesentlichen konstante Intensitätsverteilung aufweist und somit den Festkörper im wesentlichen gleichmäßig aufheizt.

Um zu vermeiden, daß der Festkörper einseitige Spannungen, beispielsweise parallel gerichtet zu der der Kühloberfläche gegenüberliegenden Oberfläche, durch einen sich nahe der der Kühloberfläche gegenüberliegenden Oberfläche ausbildenden und parallel zu dieser gerichteten Temperaturgradienten erfährt, ist vorzugsweise vorgesehen, daß der Festkörper zu der Kühloberfläche und der der Kühloberfläche gegenüberliegenden Oberfläche hin verlaufende Isothermen aufweist, was zur Folge hat, daß sowohl nahe der Kühloberfläche als auch der der Kühloberfläche gegenüberliegenden Oberfläche ein parallel zur jeweiligen Fläche verlaufender Temperaturgradient existiert und dadurch nahe beider Flächen thermische Spannungen vorliegen.

Besonders vorteilhaft ist es dabei, wenn der Verlauf der Isothermen außerhalb eines vom Pumplicht durchsetzten Bereichs einen parallel zur Kühloberfläche und nahe derselben verlaufenden oberflächennahen Gradienten aufweist, welcher in vergleichbarer Größenordnung wie ein parallel zu der der Kühloberfläche gegenüberliegenden Oberfläche und nahe derselben verlaufender oberflächennaher Gradient ist. Durch die vergleichbare Größenordnung dieser Gradienten wird zweckmäßigerweise sichergestellt, daß die thermischen Spannungen im Bereich beider, einander gegenüberliegender Flächen, im wesentlichen gleich groß sind.

Noch vorteilhafter ist es, wenn die beiden oberflächennahen Gradienten der Temperatur im wesentlichen vergleichbar groß sind.

Große, parallel zur Kühloberfläche oder Oberfläche verlaufende, insbesondere sich nur auf einer dieser beiden ausbildende Temperaturgradienten lassen sich insbesondere dadurch vermeiden, daß sich der Festkörper in Richtung parallel zur Kühlfläche über diese hinaus erstreckt und somit eine noch außerhalb der Kühlfläche verlaufenden Bereich aufweist, welcher die Möglichkeit hat, eine höhere Temperatur als die Kühlfläche einzunehmen.

Um bei diesem Ausführungsbeispiel jedoch sicherzustellen, daß die Isothermen in dem vom Laserstrahlungsfeld durchsetzten Bereich parallel zueinander und vorzugsweise parallel zur Kühlfläche verlaufen, ist vorgesehen, daß sich die Kühlfläche in parallel zu dieser verlaufenden Richtungen über den vom Laserstrahlungsfeld durchsetzten Bereich hinauserstreckt. Noch vorteilhafter ist es, wenn sich die Kühlfläche über den vom Pumplicht durchsetzten Bereich in dieser Art hinauserstreckt.

Alternativ oder ergänzend zu den vorstehend beschriebenen Möglichkeiten hinsichtlich der Ausbildung der Kühlfläche relativ zu dem vom Laserstrahlungsfeld oder vom Pumplicht durchsetzten Bereich lassen sich starke Temperaturgradienten parallel zu der Kühloberfläche oder der dieser gegenüberliegenden Oberfläche dadurch verringern, daß der Festkörper in seinem außerhalb der Kühlfläche liegenden Bereich temperierbar ist. Mit einer derartigen Temperierung des Festkörpers besteht die Möglichkeit, die außerhalb des vom Pumplicht durchstrahlten Bereichs liegenden Volumenbereiche des Festkörpers in der Aufheizung des Festkörpers durch das Pumplicht entsprechender Weise aufzuheizen und zu temperieren, so daß ein parallel zur Kühloberfläche oder der Oberfläche verlaufender Temperaturgradient stark verringert oder im Idealfall im wesentlichen reduziert werden kann.

Dies läßt sich insbesondere vorteilhafterweise dadurch erreichen, daß der Festkörper in seinem außerhalb der Kühloberfläche liegenden Bereich auf eine einen Temperaturgradienten parallel zur Kühloberfläche oder der dieser parallelen Oberfläche reduzierende Temperatur temperierbar ist.

Die Temperierbarkeit kann durch Wärmezufuhr in jeder beliebigen Art und Weise erfolgen.

Im einfachsten Fall dadurch, daß der Festkörper entsprechend beheizbar ist.

Ein derartiges Beheizen ist entweder durch Wärmekontakt des Festkörpers mit einem Heizelement oder durch Bestrahlen des Festkörpers möglich, vorzugsweise mit einer gut vom Festkörper absorbierbaren elektromagnetischen Strahlung.

Besonders vorteilhaft ist es, insbesondere um einen Dauerbetrieb zu gewährleisten, wenn der Festkörper in seinem außerhalb der Kühloberfläche liegenden Bereich auf eine definierte Temperatur temperierbar ist.

Die Temperierung des Festkörpers außerhalb der Kühloberfläche erfolgt vorzugsweise auf eine Temperatur, welche über der Temperatur der Kühloberfläche liegt. Vorzugsweise erfolgt die Temperierung des Festkörpers dergestalt, daß Temperaturgradienten im Festkörper, insbesondere außerhalb des vom Laserstrahlungsfeld durchsetzten Bereichs, erzeugt werden, die kleiner sind, als den Festkörper zerstörende Temperaturgradienten.

Hinsichtlich der Art der im Zusammenhang mit den erfindungsgemäßen Konzepten einsetzbaren Festkörper mit einem laseraktiven Material wurden bislang keine näheren Ausführungen gemacht. So ist beispielsweise die erfindungsgemäße Lösung für Neodym oder Ytterbium als laseraktives Material, eingebaut in jeweils bekannte Wirtsmaterialien - wie z.B. YAG oder FAP - für diese laseraktiven Materialien als Festkörper vorgesehen.

Als Abmessungen der erfindungsgemäßen Festkörper finden vorzugsweise Dimensionen Verwendung, bei denen der Festkörper einen Durchmesser bis 10 mm, maximal 30 mm hat.

Die mittleren Durchmesser der Festkörper betragen das ungefähr 4- bis ungefähr 60-Fache der Dicken der Festkörper. Ferner liegen die Dicken der Festkörper bei einseitiger Kühlung derselben zwischen ungefähr 0,1 und ungefähr 1 mm und bei beidseitiger Kühlung zwischen ungefähr 0,1 mm und ungefähr 2 mm.

Hinsichtlich der Ausbildung der Kühlelemente wurden ebenfalls keine näheren Angaben gemacht. So sieht ein vorteilhaftes Ausführungsbeispiel eines Kühlelements vor, daß dieses aus Metall, vorzugsweise einem gut wärmeleitenden Metall, das heißt beispielsweise Kupfer ist. Im Fall eines transparenten Kühlelements ist vorgesehen, daß dieses aus Diamant Typ 2A oder aus monokristallinem Siliziumkarbid hergestellt ist.

Weitere Merkmale und Vorteile der Erfindung sind Gegenstand der nachfolgenden Beschreibung sowie der zeichnerischen Darstellung einiger Ausführungsbeispiele. In der Zeichnung zeigen:
- Fig. 1: ein erstes Ausführungsbeispiel eines erfindungsgemäßen Laserverstärkersystem als Teil eines Lasersystems;
- Fig. 2: eine geschnittene perspektivische Darstellung eines erfindungsgemäßen Kristalls in derselben Darstellungsebene wie Fig. 1;
- Fig. 3: eine vergrößerte Darstellung eines Kühlelements mit darauf sitzendem Kristall;
- Fig. 4: eine Variante betreffend die Einkopplung von Pumplicht in den Kristall, dargestellt mit Blick in Richtung des Pfeils A in Fig. 1;
- Fig. 5: einen Teillängsschnitt ähnlich Fig. 2 durch die in Fig. 4 dargestellte Variante;
- Fig. 6: eine weitere Variante betreffend die Einkopplung von Pumplicht in den Kristall, dargestellt ähnlich Fig. 1;
- Fig. 7: eine Draufsicht ähnlich Fig. 4 auf die weitere Variante;
- Fig. 8: eine Draufsicht ähnlich Fig. 4 auf eine weitere Variante des ersten Ausführungsbeispiels betreffend die Einkopplung von Pumplicht in den Kristall;
- Fig. 9: eine Darstellung ähnlich Fig. 1 einer weiteren Variante betreffend die Einkopplung von Pumplicht in den Kristall;
- Fig. 10: eine weitere Variante betreffend die Einkopplung von Pumplicht in den Kristall, dargestellt ähnlich Fig. 1;
- Fig. 11: eine weitere Variante betreffend die Einkopplung von Pumplicht in den Kristall in einer Darstellung ähnlich Fig. 1;
- Fig. 12: eine weitere Variante des ersten Ausführungsbeispiels betreffend die Einkopplung von Pumplicht in den Kristall in einer Darstellung ähnlich Fig. 4;
- Fig. 13: eine weitere Variante des ersten Ausführungsbeispiels betreffend die Form des Kristalls in einer Darstellung ähnlich Fig. 1;
- Fig. 14: eine weitere Variante des ersten Ausführungsbeispiels betreffend die Form des Kristalls in einer Darstellung ähnlich Fig. 1;
- Fig. 15: eine weitere Variante des ersten Ausführungsbeispiels betreffend die Kühlung des Kristalls in einer Darstellung ähnlich Fig. 1;
- Fig. 16: ein zweites Ausführungsbeispiel eines erfindungsgemäßen Laserverstärkersystems als Teil eines Lasersystems;
- Fig. 17: ein drittes Ausführungsbeispiel eines erfindungsgemäßen Laserverstärkersystems als Teil eines Lasersystems;
- Fig. 18: ein viertes Ausführungsbeispiel eines erfindungsgemäßen Laserverstärkersystems als Teil eines Lasersystems;
- Fig. 19: ein fünftes Ausführungsbeispiel eines erfindungsgemäßen Laserverstärkersystems als Teil eines Lasersystems;
- Fig. 20: ein sechstes Ausführungsbeispiel eines erfindungsgemäßen Laserverstärkersystems umfassend ein System mit einem Laser und einem nachgeschalteten Laserverstärker;
- Fig. 21: ein siebtes Ausführungsbeispiel eines erfindungsgemäßen Laserverstärkersystems als Lasersystem;
- Fig. 22: eine schematische Darstellung von Isothermen im Festkörper gemäß dem siebten Ausführungsbeispiel;
- Fig. 23: eine erste Variante des siebten Ausführungsbeispiels;
- Fig. 24: eine Darstellung von Isothermen bei der ersten Variante des siebten Ausführungsbeispiels;
- Fig. 25: eine schematische Darstellung einer zweiten Variante des siebten Ausführungsbeispiels ähnlich Fig. 21;
- Fig. 26: eine dritte Variante des siebten Ausführungsbeispiels, dargestellt ähnlich Fig. 21;
- Fig. 27: eine vierte Variante des siebten Ausführungsbeispiels, dargestellt ähnlich Fig. 21;
- Fig. 28: ein achtes Ausführungsbeispiel eines erfindungsgemäßen Laserverstärkersystems als Lasersystem in schematischer Darstellung der optischen Komponenten;
- Fig. 29: eine Schnittdarstellung durch einen Aufbau des achten Ausführungsbeispiels gemäß Fig. 28;
- Fig. 30: eine Darstellung eines neunten Ausführungsbeispiels eines erfindungsgemäßen Laserverstärkersystems als Lasersystem ähnlich Fig. 28;
- Fig. 31: eine Darstellung eines zehnten Ausführungsbeispiels eines erfindungsgemäßen Lasersystems als Laserverstärkersystem in einer Draufsicht ähnlich Fig. 4;
- Fig. 32: ein elftes Ausführungsbeispiel eines erfindungsgemäßen Laserverstärkersystems, dargestellt in Schnittdarstellung;
- Fig. 33: eine Variante des elften Ausführungsbeispiels gemäß Fig. 32 und
- Fig. 34: ein zwölftes Ausführungsbeispiel eines erfindungsgemäßen Laserverstärkersystems.
- Tabelle 1: eine Zusammenstellung von im Rahmen der erfindungsgemäßen Ausführungsbeispiele vorzugsweise einsetzbaren Festkörpermaterialien und Parametern derselben.

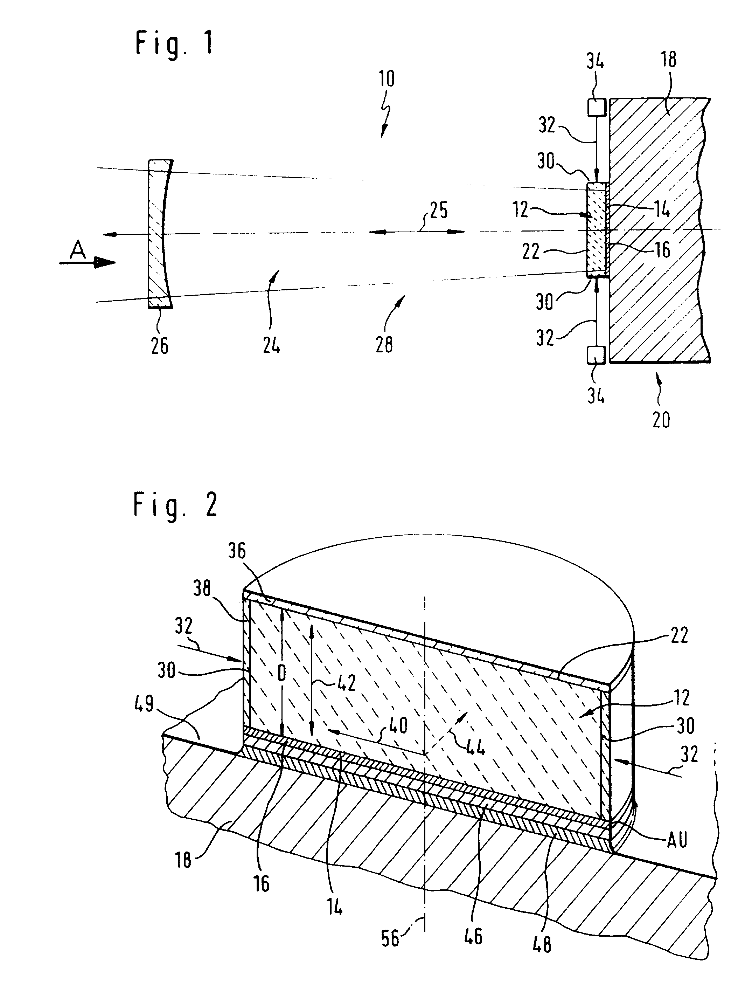

Ein Ausführungsbeispiel eines erfindungsgemäßen Laserverstärkersystems, in Fig. 1 als Ganzes mit 10 bezeichnet, umfaßt einen strahlungsverstärkenden Kristall 12 aus ytterbiumdotiertem Kristallmaterial, welcher eine Kühloberfläche 14 aufweist, die ihrerseits eine Reflektorschicht 16 trägt. Diese Reflektorschicht 16 ist vollflächig mit einem Kühlkörper 18 wärmeleitend verbunden, so daß die Reflektorschicht 16 und der Kühlkörper 18 gemeinsam ein Kühlelement 20 bilden, auf welchem der Kristall 12 mit seiner Kühloberfläche 14 vollflächig aufliegt.

Der Kühloberfläche 14 gegenüberliegend trägt der Kristall 12 eine Oberfläche 22, welche von einem Laserstrahlungsfeld 24 durchsetzt ist.

Dieses Laserstrahlungsfeld 24 bildet sich einerseits zwischen einem Auskoppelspiegel 26 und der Reflektorschicht 16 aus, die gemeinsam als Ganzes mit 28 bezeichneten Resonator bilden, welcher das Laserverstärkersystem 10 zu einem Lasersystem ergänzt.

Das Laserstrahlungsfeld 24 des Resonators 28 durchsetzt somit die Oberfläche 22 des Kristalls 12, tritt in diesen ein und wird von der Reflektorschicht 16 reflektiert, auf welcher der Kristall 12 mit seiner Kühloberfläche 14 sitzt.

Der Kristall 12 weist ferner Seitenflächen 30 auf, welche quer, vorzugsweise senkrecht zur Kühloberfläche 14, verlaufen. Diese Seitenflächen sind von Pumplicht 32 aus Pumplichtstrahlungsquellen 34 durchsetzt, wobei das Pumplicht 32 zu einer Volumenanregung im Kristall 12, insbesondere in dem von dem Laserstrahlungsfeld 24 durchsetzten Bereich desselben, führt.

Wie in Fig. 2 dargestellt, sitzt der erfindungsgemäße Kristall 12 mit der Kühloberfläche 14 auf der Reflektorschicht 16, welche vorzugsweise als hochreflektierende Beschichtung auf die Kühloberfläche 14 aufgebracht ist.

Ferner trägt der erfindungsgemäße Kristall 12 auf seiner der Kühloberfläche 14 gegenüberliegenden Oberfläche 22 eine antireflektierende Beschichtung 36, welche für das Laserstrahlungsfeld 24 antireflektierend ausgebildet ist. Zusätzlich sind die Seitenflächen 30 ebenfalls mit einer antireflektierenden Beschichtung 38 versehen, welche für das Pumplicht 32 antireflektierend ausgebildet ist.

Vorzugsweise handelt es sich bei dem erfindungsgemäßen Kristall um eine Kristallscheibe, deren Kühloberfläche 14 als kreisrunde Scheibe ausgebildet ist und damit mindestens in einer Oberflächenrichtung 40 eine Dimension aufweist, welche größer, vorzugsweise ein Mehrfaches größer als eine Dicke D des Kristalls ist, gemessen in einer Richtung 42, welche senkrecht auf der Oberflächenrichtung 40 steht.

Im Fall der erfindungsgemäßen kreisrunden Kühloberfläche 14 weist noch eine zweite Oberflächenrichtung 44, welche senkrecht auf der Oberflächenrichtung 40 steht, eine Dimension auf, die ebenfalls größer als die Dicke D ist.

Um eine effektive thermische Ankopplung des Kristalls 12 an den Kühlkörper 18 zu erhalten, ist die Reflektorschicht 16 auf ihrer dem Kristall 12 abgewandten Seite mit einer Metallisierung 46, vorzugsweise aus Kupfer, versehen, die ihrerseits über eine Kontaktschicht 48 aus weichem Metall - vorzugsweise weichem Lot oder Indium - mit einer Trägerfläche 49 des Kühlkörpers flächenhaft verbunden ist.

Ferner ist die Wärmeleitfähigkeit des Kühlelements 20 größer als die des Kristalls, so daß im Kühlelement 20 eine effektivere Wärmeableitung als im Kristall 12 erfolgt und im Kristall 12 ein Temperaturgradient parallel zur Richtung 42 entsteht, welcher somit im wesentlichen parallel zu einer Ausbreitungsrichtung 25 des Laserstrahlungsfeldes 24 verläuft.

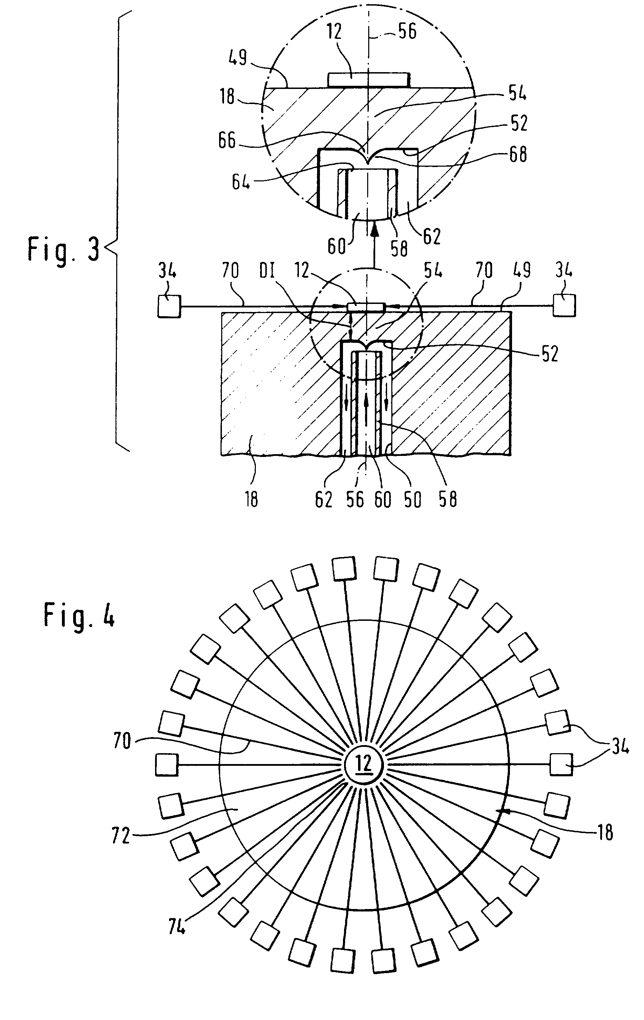

Wie in Fig. 3 dargestellt, ist der Kühlkörper 18 mit einer sich in diesem erstreckenden Kühlbohrung 50 versehen, welche mit einem Boden 52 in einem Bereich 54 des Kühlkörpers 18 endet, welcher dem Kristall 12 benachbart liegt. Vorzugsweise erstreckt sich die Kühlbohrung 50 längs einer Achse 56, zu welcher auch der Kristall 12 koaxial ausgerichtet ist.

Zur Durchströmung der Kühlbohrung mit einem Kühlmedium, vorzugsweise Wasser, ragt in die Kühlbohrung 50 ein Rohr 58 hinein, welches einen innerhalb desselben liegenden Zuflußkanal 60 und einen zwischen diesem und der Kühlbohrung 50 liegenden Abflußkanal 62 bildet.

Ferner weist eine Mündung 64 des Rohrs 58 in Richtung des Bodens 52, wobei der Boden 52 mit einem Umlenkkegel 66 versehen ist, welcher vorzugsweise koaxial zur Achse 56 angeordnet ist und somit mittig vom Boden 52 weg in Richtung der Mündung 54 ragt. Dieser Umlenkkegel 66 bildet mit seinen Kegelmantelflächen 68 Umlenkflächen, welche das Kühlmedium von dem Zuflußkanal 60 kommend in radialer Richtung zur Achse 56 zum Abflußkanal 62 hin umlenken. Durch diesen Umlenkkegel 66 mit den Umlenkflächen 68 ist ein intensiver Wärmeaustausch zwischen dem durch den Zuflußkanal 60 zuströmendem Kühlmedium und dem Kühlkörper 18, insbesondere dessen Bereich 54 möglich, so daß eine effiziente Kühlung des Bereichs 54 und somit auch des auf diesem sitzenden Kristalls 12 über das Kühlmedium erfolgt.

Der Bereich 54 weist vorzugsweise eine Dicke DI auf, welche größer als der Quotient der Kühloberfläche 14 dividiert durch deren Außenumfang AU ist, so daß im Kühlkörper 18 die Wärmeableitung durch eine gedachte Zylinderfläche mit dem Umfang U und der Höhe DI besser ist als die Wärmeableitung über die Kühloberfläche 14 und somit kann auch in dem Bereich 54 kein Wärmestau eintreten.

Vorzugsweise ist eine durch die Kegelmantelflächen 68, dem Boden 52 und Wandflächen der Bohrung 50 gebildete wärmeabgebende Fläche des Kühlkörpers 18 um ein vielfaches größer als die Kühloberfläche.

Als Kühlmedium kommt im einfachsten Fall Wasser zum Einsatz.

Vorzugsweise wird das Kühlmedium von einer zeichnerisch in Fig. 3 nicht dargestellten Kühleinrichtung dem Zuflußkanal 60 zugeführt und aus dem Abflußkanal 62 abgeführt und auf eine vorgegebene Temperatur gekühlt.

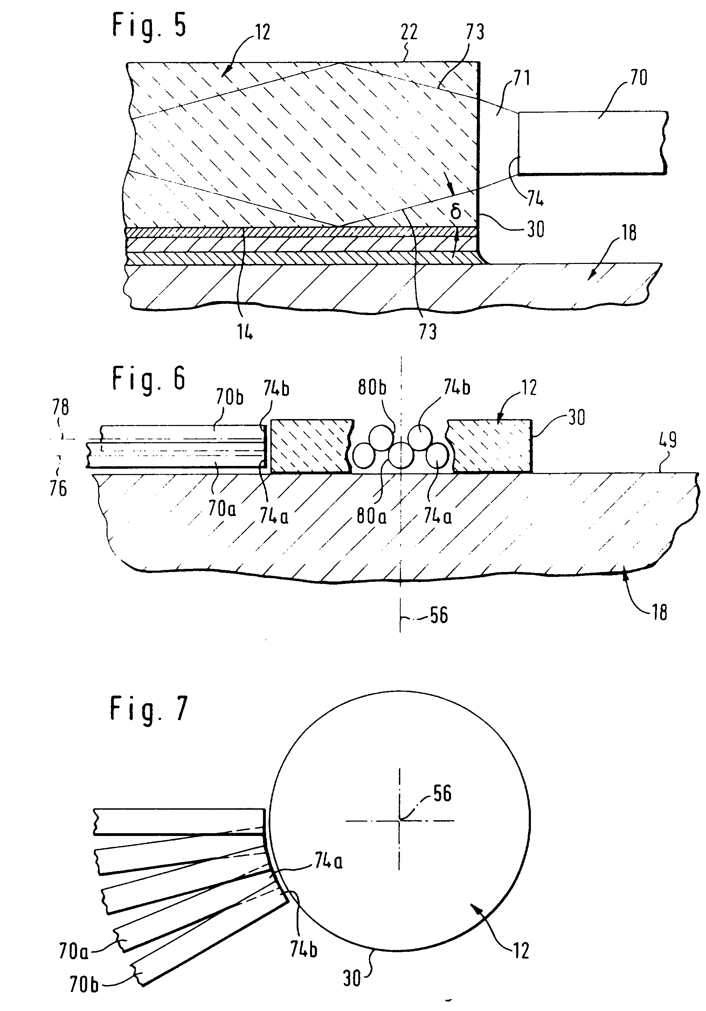

Wie in Fig. 4 dargestellt, erfolgt vorzugsweise die Einkopplung des von den Pumplichtquellen 34 gelieferten Pumplichts 32 in den Kristall 12 mittels Lichtleiter 70, welche sich ausgehend von den Pumplichtquellen 34 in Richtung des Kristalls 12 erstrecken und beispielsweise, wie in Fig. 5 dargestellt, mit ihrem kristallnahen Enden 74 in geringem Abstand von dem Kristall 12 enden.

Das aus diesen kristallnahen Enden 74 austretende Pumplicht 32 divergiert in einem Kegel 71 bis zum Auftreffen auf die Seitenfläche 30 und wird im Kristall 12 nochmals gebrochen, so daß die Randstrahlung 73 des sich im Kristall 12 ergebenden Konus mit einem Winkel δ auf die Kühloberfläche 14 und die Oberfläche 22 auftritt der kleiner als der Winkel der Grenzwinkel der Totalreflexion und diesen Flächen 14, 22 ist.

Damit wird das Pumplicht 32 im Kristall 12 in den Richtungen 40 oder 44 durch Totalreflexion geführt und hat eine im wesentlichen gleichmäßige Volumenanregung des gesamten Kristalls 12 zur Folge.

Vorzugsweise sind rings um den Kristall 12 in einer zu einer Oberseite 72 des Kühlkörpers 18 parallelen Ebene die Pumplichtquellen 34 angeordnet und auch die Lichtleiter 70 erstrecken sich ebenfalls in einer zur Trägerfläche 49 parallelen Ebene 72 von den Pumplichtquellen 34 zu den Seitenflächen 30 des Kristalls 12.

Um möglichst viel Pumplicht in den Kristall 12 einzukoppeln sind zweckmäßigerweise die Lichtleiter 70 so angeordnet, daß sie mit ihrem kristallnahen Ende 74 im Bereich ihrer Mantelflächen aneinander anschließen.

Noch vorteilhafter ist eine Anordnung der Lichtleiter 70, welche bevorzugterweise optische Fasern sind, gemäß der in Fig. 6 und 7 dargestellten Konfiguration. Bei dieser Konfiguration kommen in einer Ebene 76 angeordnete Fasern 70a und in einer Ebene 78 angeordnete Fasern 70b zum Einsatz, wobei die Ebenen 76 und 78 ebenfalls parallel zur Trägerfläche 49 verlaufen und bevorzugterweise so angeordnet sind, daß die kristallnahen Enden 74b und 74a der Fasern 70a bzw. 70b mit ihren Außenmänteln 80a bzw. 80b sich berühren und dabei die kristallnahen Enden 74a gegenüber den kristallnahen Enden 74b und umgekehrt auf Lücke angeordnet sind.

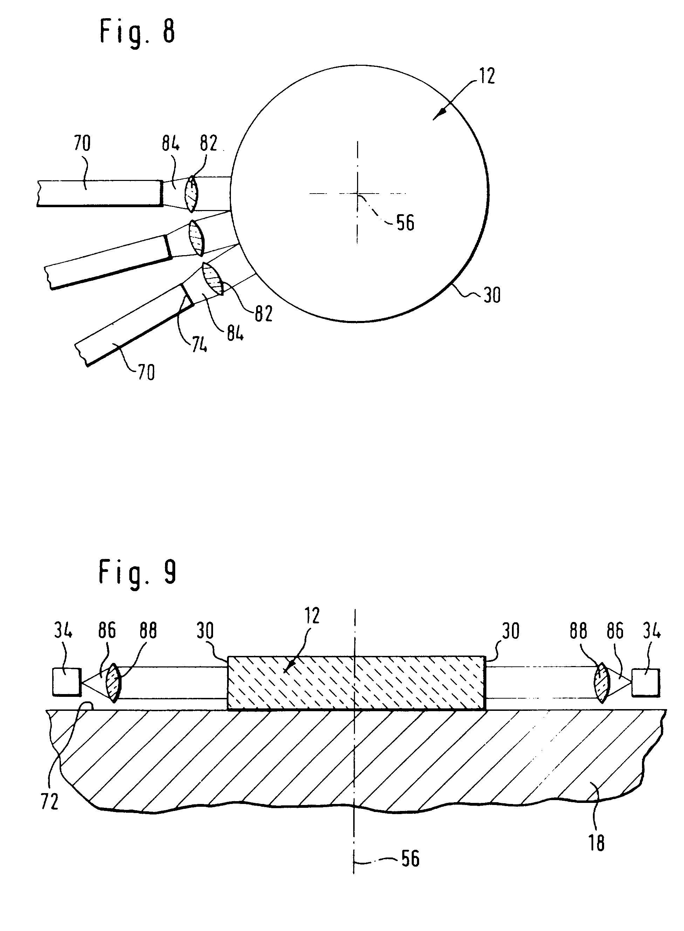

Bei einer Variante der erfindungsgemäßen Lösung, dargestellt in Fig. 8, liegen die Fasern 70 mit ihren kristallnahen Enden 74 im Abstand von den Seitenflächen 30 des Kristalls 12 und zwischen den kristallnahen Enden 74 und den Seitenflächen 30 sind als Abbildungsoptik Linsen 82 angeordnet, welche aus den kristallnahen Enden 74 austretendes divergierendes Pumplicht 84 auf die Seitenflächen 30 abbilden.

Erfindungsgemäß werden bei allen bisherigen Ausführungsbeispielen als Pumplichtquellen 34 Laserdioden eingesetzt.

Eine weitere Variante der erfindungsgemäßen Lösung, dargestellt in Fig. 9, sieht vor, als Pumplichtquellen 34 nur Laserdioden einzusetzen, jedoch keine Lichtleiter 70, sondern einen divergierenden Strahlungskegel 86, welcher aus jeder der Laserdioden 34 austritt, mittels einer Linsenoptik 88 auf die Seitenfläche 30 des Kristalls 12 abzubilden, wobei vorzugsweise die Linsenoptik 88 als ringförmige, koaxial zur Achse 56 und in einer Ebene parallel zur Oberseite 72 angeordnete Ringlinse oder ringförmige Zylinderlinse mit konvexem Querschnitt ausgebildet ist.

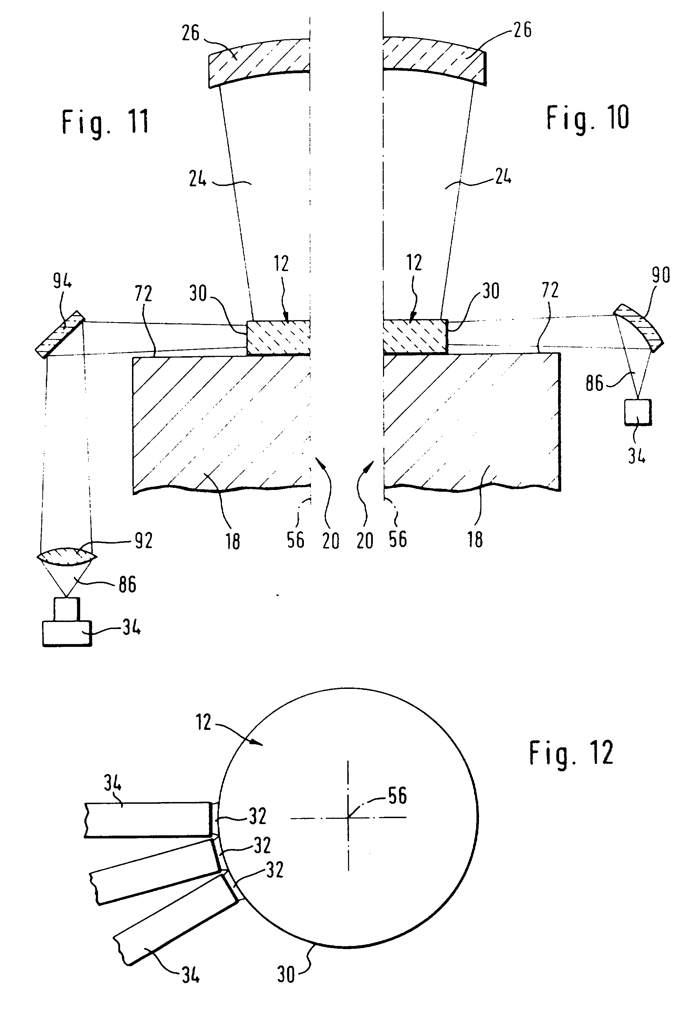

Eine weitere, alternative Variante, dargestellt in Fig. 10, sieht einen Paraboloidspiegel 90 vor, welcher den divergenten Strahlungskegel 86, der aus einer als Pumplichtquelle 34 dienenden Laserdiode austritt, durch Reflexion auf die Seitenfläche 30 des Kristalls 12 abbildet. Vorzugsweise ist bei einem zur Achse 56 rotationssymmetrischen Kristall 12 dieser Paraboloidspiegel 90 ringförmig und koaxial zur Achse 56 ausgebildet und stellt somit ein Segment eines ringförmigen Toroids dar.

Alternativ dazu sieht eine weitere, in Fig. 11 dargestellte zur Achse 56 rotationssymmetrische Variante der erfindungsgemäßen Lösung vor, den divergierenden Strahlungskegel 86 einer Laserdiode als Pumplichtquelle 34 mittels einer Linse 92, kombiniert mit einem Spiegel 94 auf die Seitenfläche 30 des Kristalls 12 abzubilden.

Bei beiden Varianten gemäß Fig. 10 und Fig. 11 besteht die Möglichkeit, die Pumplichtquelle 34 beispielsweise in Form der Laserdiode neben dem Kühlkörper 18 anzuordnen und zur Wärmeableitung mit diesem zu verbinden.

Eine weitere Variante der erfindungsgemäpen Lösung sieht, wie in Fig. 12 dargestellt, vor, die Pumplichtquellen 34 in Form von Laserdioden unmittelbar benachbart der Seitenfläche 30 anzuordnen, so daß keinerlei Kopplungselement erforderlich ist und die aus diesen Laserdioden 34 austretende Pumplichtstrahlung unmittelbar in den Kristall 12 zur Anregung des Kristallmaterials eintritt, ohne daß ein Abbildungselemente zwischen den Laserdioden 34 und dem Kristall 12 vorgesehen ist.

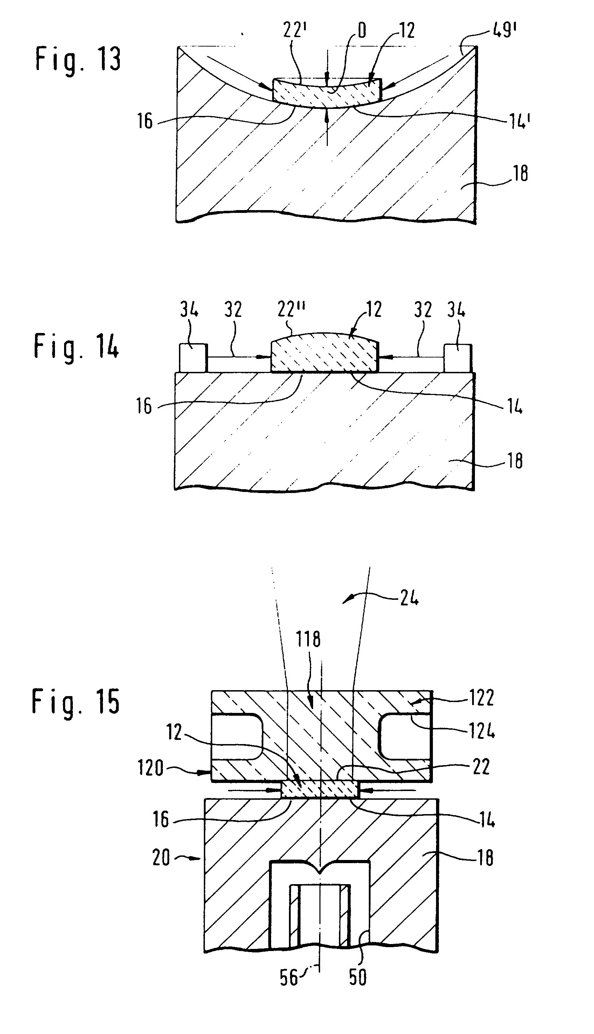

Bei einer weiteren Variante eines erfindungsgemäßen Laserverstärkers, dargestellt in Fig. 13, weist der Kühlkörper 18 keine ebene Trägerfläche 49 auf, sondern eine konkav gekrümmte Trägerfläche 49'.

Entsprechend ist auch die Kühloberfläche 14' des Kristalls 12' geformt, so daß eine vollflächig auf der Trägerfläche 49' aufliegende Reflektorschicht 16 mit im wesentlichen konstanter Dicke ihrerseits wiederum auf der Kühloberfläche 14' vollflächig aufliegt.

In gleicher Weise ist in diesem Fall auch die der Kühloberfläche 14' gegenüberliegende Oberfläche 22' konkav geformt, so daß der Kristall 12 eine konstante Dicke D aufweist.

Alternativ dazu ist bei einer weiteren, in Fig. 14 ausschnittsweise dargestellten Variante der erfindungsgemäßen Lösung der Kristall 12 selbst mit einer konvexen Oberfläche 22" versehen, welche als Kristallinse wirkt. Im übrigen ist die Kühloberfläche 14 eine ebene Fläche in gleicher Weise wie bei der beispielsweise in Fig. 1 bis 3 dargestellten Grundvariante des ersten Ausführungsbeispiels.

Eine weitere, noch effizientere Kühlung ist bei einer weiteren, in Fig. 15 dargestellten Variante des ersten Ausführungsbeispiels dadurch erreichbar, daß auf der Oberfläche 22 noch ein weiteres Kühlelement 120 sitzt, welches seinerseits aus einem hochwärmeleitfähigen und transparenten Material, wie beispielsweise Siliziumkarbid ausgebildet ist und mittig einen von dem Laserstrahlungsfeld 24 durchsetzten Bereich 118 aufweist, an welchen sich Außenbereiche 122 anschließen, welche von einem Kühlmedium, vorzugsweise Kühlwasser durchsetzte Ausnehmungen 124 umfassen, so daß über das die Ausnehmungen 124 durchströmende Kühlmedium ein Abtransport von Wärme aus dem Material der Außenbereiche 122 und über diese wiederum aus dem mittleren, von dem Laserstrahlungsfeld 24 durchsetzten Bereich 118 des Kühlelements 120 erfolgt. Alternativ dazu kann das transparente Kühlelement in einem Ring angeordnet sein, der die Ausnehmung für das Kühlmedium aufweist.

In diesem Fall ist der Kristall 12 zwischen dem Kühlelement 120 und dem Kühlelement 20, gebildet aus dem Kühlkörper 18 und der Reflektorschicht 16 angeordnet und somit auf beiden, einander gegenüberliegenden Flächen, das heißt der Oberfläche 22 und der Kühloberfläche 14 gekühlt, während über die Seitenflächen 30 in bekannter Weise die Einkopplung des Pumplichts 32 erfolgt.

Im übrigen ist diese Variante gleich ausgebildet wie das erste Ausführungsbeispiel gemäß Fig. 1 und 2.

Sämtliche Varianten des ersten Ausführungsbeispiels sind im übrigen mit der ersten Form und/oder der ersten Variante identisch, so daß diesbezüglich auf die Ausführungen hierzu vollinhaltlich Bezug genommen wird.

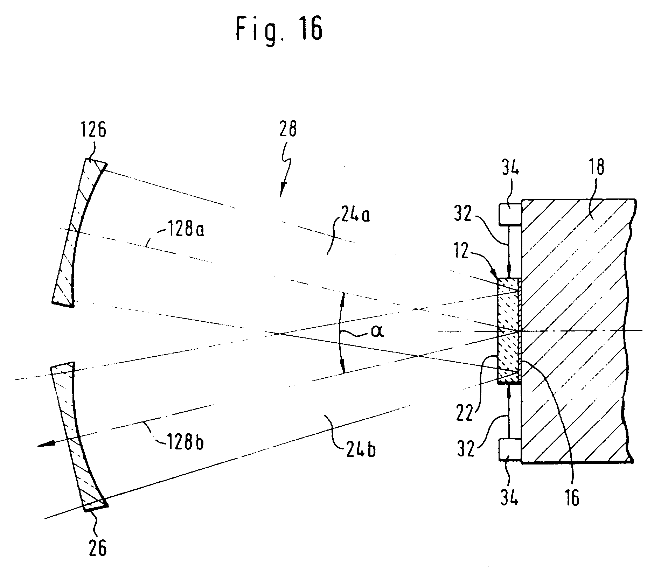

Ein zweites, in Fig. 16 dargestelltes Ausführungsbeispiel eines erfindungsgemäßen Laserverstärkers unterscheidet sich von dem in Fig. 1 dargestellten Ausführungsbeispiel lediglich dadurch, daß das Laserstrahlungsfeld 24 dasjenige eines gefalteten Resonators darstellt und zwei Äste 24a und 24b aufweist, wobei der Resonator 28 einen Endspiegel 126 aufweist, welcher vorzugsweise vollreflektierend ist. Von diesem Endspiegel 126 ausgehend erstreckt sich der Ast 24a des Laserstrahlungsfeldes bis zum Kristall 12, tritt durch dessen Oberfläche 22 hindurch in diesen ein und wird an der Reflektorschicht 16 in Form des zweiten Astes 24b reflektiert, welcher auf den Auskoppelspiegel 26 trifft und teilweise reflektiert wird sowie teilweise durch diesen hindurchtritt. Die beiden Äste 24a und 24b sind in einem spitzen Winkel a relativ zueinander geneigt, so daß auch eine Resonatorachse 128 zwei Äste 128a und 128b aufweist, die in dem spitzen Winkel zueinander verlaufen.

Der Vorteil des zweiten Ausführungsbeispiels ist darin zu sehen, daß sich aufgrund des gefalteten Resonators im Gegensatz zum ersten Ausführungsbeispiel in der Richtung 42 keine stehenden Wellen ausbilden können, die im ersten Ausführungsbeispiel zu einer ungleichmäßigen Ausnutzung des angeregten Kristalls führen.

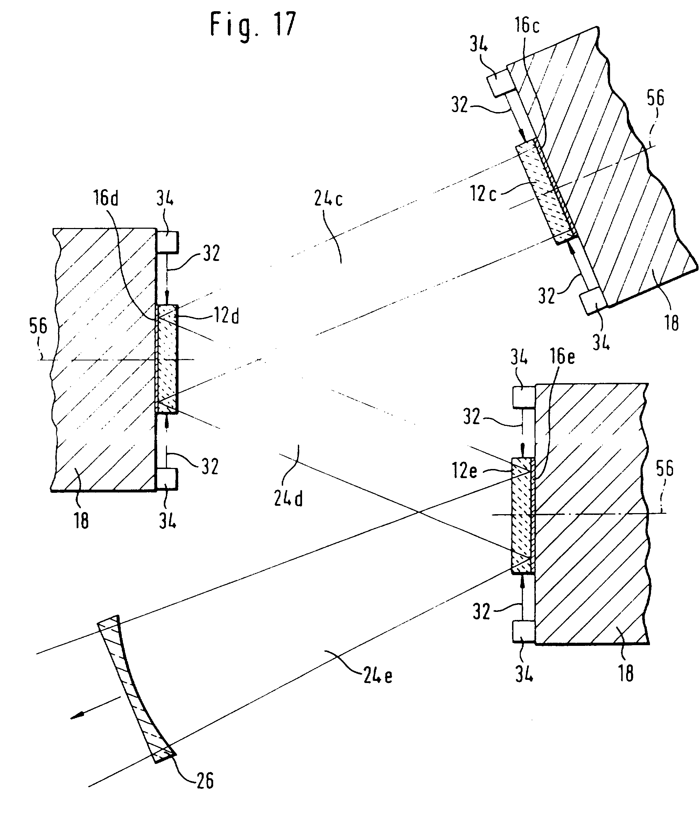

Ein drittes Ausführungsbeispiel, dargestellt in Fig. 17, umfaßt einen Laserverstärker, ebenfalls ausgebildet als Laser mit einem mehrfach gefalteten Resonator, wobei das Laserstrahlungsfeld insgesamt 3 Äste 24c, 24d und 24e aufweist. Dabei erstreckt sich der Ast 24c von einer ersten Reflektorschicht 16c mit einem auf dieser sitzenden Kristall 12c zu einer Reflektorschicht 16d mit einem auf dieser sitzenden Kristall 12d. Ausgehend von der Reflektorschicht 16d erstreckt sich der zweite Ast 24d zu einer Reflektorschicht 16e mit einem auf dieser sitzenden Kristall 12e und von der Reflektorschicht 16e erstreckt sich der Ast 24e des Laserstrahlungsfeldes 24 zum Auskoppelspiegel 26.

Das Pumpen und das Kühlen der Kristalle 12c, 12d und 12e erfolgt in gleicher Weise wie im Zusammenhang mit dem ersten Ausführungsbeispiel in Fig. 1 beschrieben. Darüber hinaus sind auch alle, im Zusammenhang mit dem ersten Ausführungsbeispiel beschriebenen Varianten denkbar.

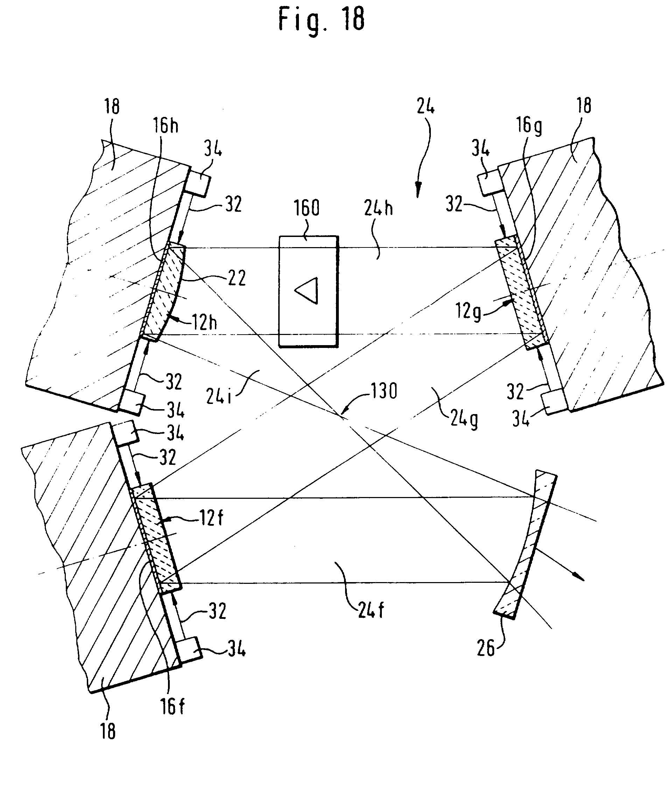

Bei einem vierten Ausführungsbeispiel, dargestellt in Fig. 18 bildet das Laserstrahlungsfeld 24 einen Ringresonator, dessen erster Ast 24f sich ausgehend von dem Auskoppelspiegel 26 zu einer Reflektorschicht 16f mit einem darauf sitzenden Kristall 12f erstreckt. Von dieser Reflektorschicht 16f erstreckt sich ein zweiter Ast 24g zu einer Reflektorschicht 16g mit einem davor sitzenden Kristall 12g, von der Reflektorschicht 16g erstreckt sich wiederum ein dritter Ast 24h zu einer Reflektorschicht 16h mit einem davor sitzenden Kristall 12h, welcher eine konvexe Oberfläche 22 aufweist. Die konvexe Oberfläche 22 führt zu einer Fokussierung eines vierten Astes 24i in einem Fokus 130, welcher sich nach dem Fokus 130 wiederum aufweitet und auf den Auskoppelspiegel 26 trifft.

Um einen eindeutigen Strahlungsumlauf in dem Laserstrahlungsfeld 24 des Ringresonators festzulegen, ist eine optische Diode 160 vorgesehen, welche eine Ausbreitung der Strahlung in dem ringförmig geschlossenen Laserstrahlungsfeld 24 nur in eine Richtung zuläßt.

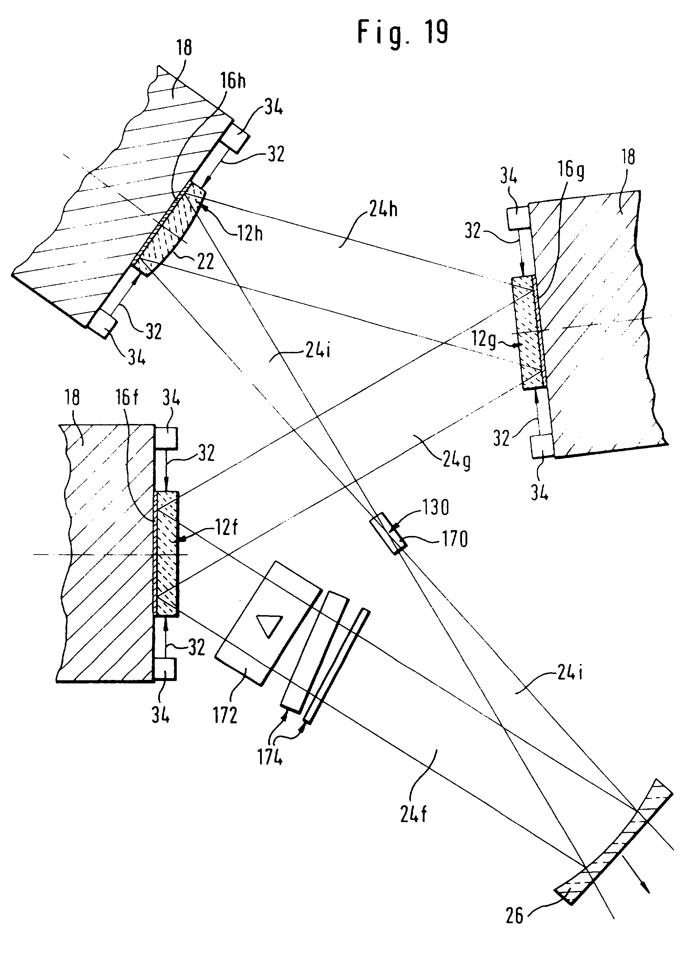

Bei einem fünften Ausführungsbeispiel, dargestellt in Fig. 19 ist der Aufbau ähnlich dem vierten Ausführungsbeispiel, mit dem Unterschied, daß in dem Fokus 130 noch ein Verdopplerkristall 170 angeordnet ist, so daß die Laserwellenlänge des Lasers halbiert ist. Darüber hinaus ist zusätzlich zu der optischen Diode 172, die bei diesem Ausführungsbeispiel im Ast 24f angeordnet ist, noch ein Etalon 174 vorgesehen, welches eine schmalbandige Frequenzabstimmung erlaubt. Dieses Etalon ist beispielsweise ebenfalls in dem Ast 24f vorgesehen.

Im übrigen ist das Konzept mit dem des vierten Ausführungsbeispiels gemäß Fig. 18 identisch, so daß auf die Ausführungen hierzu vollinhaltlich Bezug genommen wird.

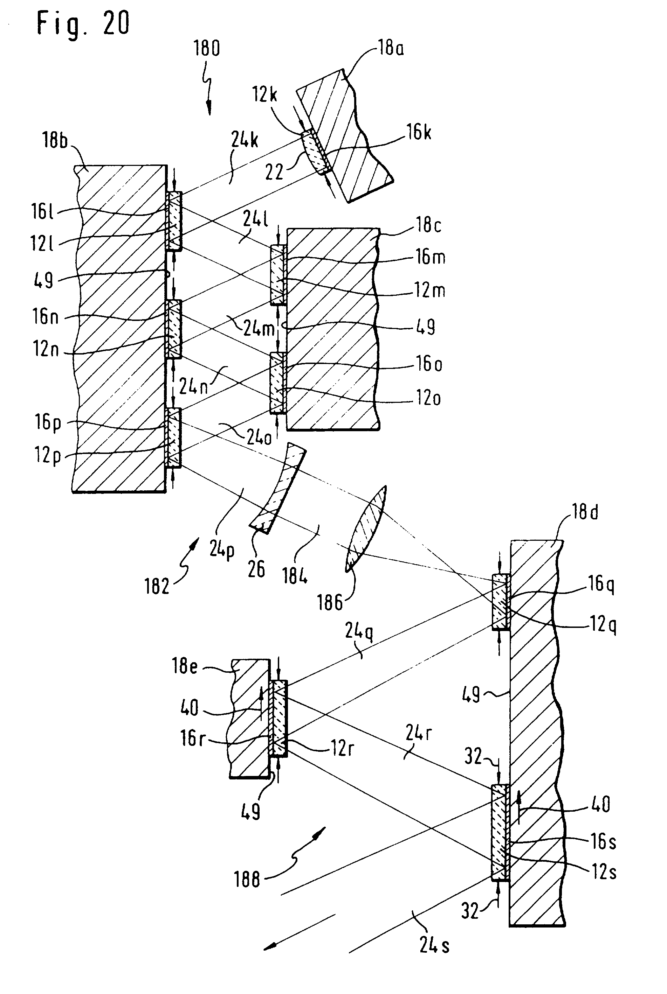

Bei einem weiteren Ausführungsbeispiel eines Lasersystems, dargestellt in Fig. 20, sind zwei erfindungsgemäße Laserverstärkersysteme vorgesehen, nämlich einmal in einem Laser 180 mit einem Resonator 182, welcher gebildet ist, durch den Auskoppelspiegel 26 und eine Reflektorschicht 16k als Endspiegel. Auf dieser Reflektorschicht 16k sitzt ein Kristall 12k mit einer konvexen Oberfläche 22.

Ausgehend von der Reflektorschicht 16k erstreckt sich ein erster Ast 24k des Laserstrahlungsfeldes 24 bis zu einer Reflektorschicht 161, vor welcher ebenfalls ein Kristall 121 sitzt. Von der Reflektorschicht 161 ausgehend erstreckt sich ein zweiter Ast 241 bis zu einer Reflektorschicht 16m, vor welcher ebenfalls ein Kristall 12m sitzt, von der Reflektorschicht 16m erstreckt sich ein dritter Ast 24m bis zu einer Reflektorschicht 16n, vor welcher ein Kristall 12n sitzt. Von der Reflektorschicht 16n erstreckt sich ein vierter Ast 24n bis zu einer Reflektorschicht 160, vor welcher ein Kristall 120 sitzt, von der Reflektorschicht 160 erstreckt sich ein Ast 240 bis zu einer Reflektorschicht 16p, vor welcher ein Kristall 12p sitzt und von der Reflektorschicht 16p erstreckt sich ein Ast 24p bis zum Endspiegel 26. Alle diese Elemente bilden gemeinsam den Laser 180, der vom Prinzip her gesehen dem des dritten Ausführungsbeispiels gemäß Fig. 17 entspricht, wobei der Endspiegel 26 ein teildurchlässiger Auskoppelspiegel ist.

Ein durch das durch den Auskoppelspiegel 26 hindurchtretende Laserstrahlungsfeld 24 gebildeter austretender Laserstrahl 184 wird über eine Linse 186 auf eine Reflektorschicht 16q reflektiert, vor welcher ein Kristall 12q sitzt. Die Reflektorschicht 16q reflektiert wiederum mit einem leicht aufgeweiteten Ast 24q zu einer Reflektorschicht 16r, vor welcher ein Kristall 12r sitzt und diese wiederum mit einem Ast 24r zu einer Reflektorschicht 16s, vor welcher ein Kristall 12s sitzt. Die Reflektorschicht 16s reflektiert wiederum in einen Ast 24s, welcher letztlich den austretenden, divergierenden Laserstrahl darstellt.

Die Reflektorschichten 16q bis s und die Kristalle 12q bis s bilden dabei einen als Ganzes mit 188 bezeichneten Laserverstärker, welcher den Laserstrahl 184 noch zusätzlich verstärkt. Dabei divergieren die Äste 24q bis 24s und somit sind auch die Reflektorschichten 16q bis 16s und die Kristalle 12q bis 12s hinsichtlich ihrer Erstreckung in den Oberflächenrichtungen 40 und 44 größer zu dimensionieren, um die Leistungsdichte in den Kristallen 12q bis 12s ungefähr konstant zu halten.

Wie bei den vorangehenden Ausführungsbeispielen werden die Kristalle 12k bis 12s entsprechend einer der im Zusammenhang mit dem ersten Ausführungsbeispiel beschriebenen Varianten mit Pumplicht 32 aus Pumplichtquellen 34 gepumpt.

Außerdem sitzen die Reflektorschichten 16k bis 16s jeweils ihrerseits auf einem Kühlkörper 18, wobei beispielsweise die Möglichkeit besteht, die Reflektorschichten 161, 16n und 16p jeweils auf einem einzigen Kühlkörper 18b anzuordnen und in gleicher Weise auch die Reflektorschichten 16m und 16o auf einem einzigen Kühlkörper 18c anzuordnen.

Im einfachsten Fall sind dabei die Tragflächen 49 der Kühlkörper parallel zueinander ausgerichtet und weisen ebene Flächen auf.

In gleicher Weise sind auch bei dem Laserverstärker gemäß Fig. 20 die Reflektorflächen 16q und 16s auf einem einzigen Kühlkörper 18d angeordnet und erstrecken sich parallel zur Reflektorfläche 16r, wobei alle Reflektorflächen 16q bis 16s ebene Flächen sind.

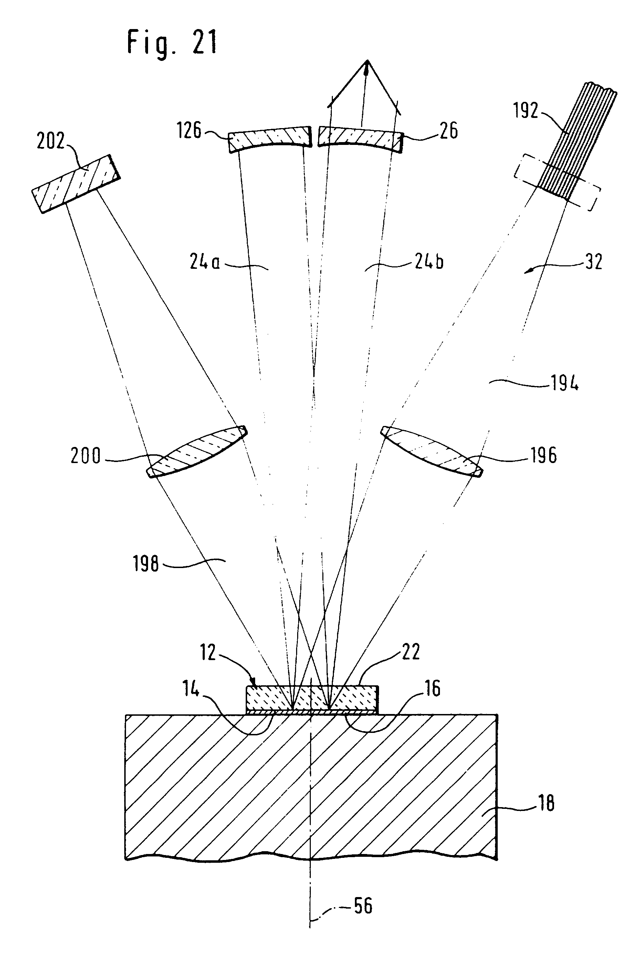

Bei einem weiteren Ausführungsbeispiel, dargestellt in Fig. 21 ist die Anordnung des Kristalls 12 auf dem Kühlkörper 18 mit der Reflektorschicht 16 gleich gewählt wie bei dem zweiten, in Fig. 16 dargestellten Ausführungsbeispiel.

Im Gegensatz zu dem zweiten Ausführungsbeispiel erfolgt jedoch eine Versorgung des Kristalls 12 mit Pumplicht 32 ebenfalls über die Oberfläche 22, wobei beispielsweise ein aus einem Faserbündel 192 austretender Pumplichtstrahl 194 mittels einer Linse 196 auf den Kristall 12 abgebildet wird, dabei mit einem spitzen Winkel gegenüber der Achse 56 durch die Oberfläche 22 in den Kristall 12 eintritt, von der Reflektorschicht 16 reflektiert wird und mit einem entsprechenden spitzen Winkel aus der Oberfläche in Form eines austretenden Strahls 198 austritt, welcher seinerseits wiederum über eine Linse 200 auf einen rückreflektierenden Spiegel 202 abgebildet wird, der den gesamten Strahl wieder zurückreflektiert, so daß ein Mehrfachdurchtritt des Pumplichts 32 durch den Kristall sichergestellt ist, um den Kristall 12 effektiv und möglichst homogen, und zwar ungefähr parallel zur Richtung 42, in dem von Laserstrahlungsfeld durchsetzten Volumenbereich zu pumpen.

Um insbesondere den vom Laserstrahlungsfeld 24 durchsetzten Volumenbereich des Kristalls 12 in vollem Umfang zu pumpen ist ferner vorgesehen, daß der Winkel gegenüber der Achse 56, mit welcher der Pumplichtstrahl 194 in den Kristall 12 eintritt größer ist als der Winkel, mit welchem das Laserstrahlungsfeld 24 gegenüber der Achse 56 geneigt ist.

Im übrigen ist das siebte, in Fig. 21 dargestellte Ausführungsbeispiel in gleicher Weise ausgebildet wie die vorhergehenden Ausführungsbeispiele, so daß auf die Ausführungen hierzu vollinhaltlich Bezug genommen werden kann.

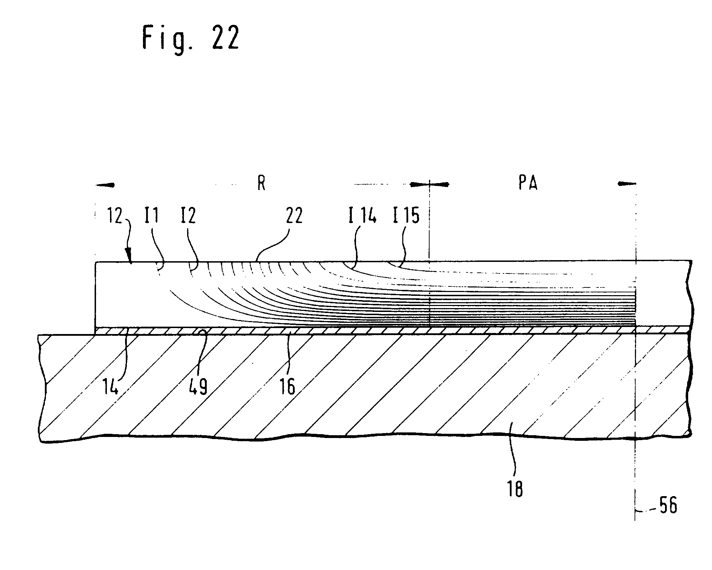

Betrachtet man, wie in Fig. 22 dargestellt, den Verlauf von Isothermen I, das heißt Linien mit jeweils gleicher Temperatur, in dem Kristall 12, so ist bei dem siebten Ausführungsbeispiel zu erkennen, daß die Isothermen I in einem vom Pumplicht 32 angeregten Bereich PA parallel zueinander und parallel zur Kühloberfläche 14 verlaufen, jedoch in einem radial bezüglich der Achse 56 außerhalb des vom Pumplicht 32 angeregten Bereichs PA außenliegenden Bereich R die Isothermen I (in Fig. 22) die Isothermen I1 bis I15, wobei I1 < I15 ist, von der Kühloberfläche 14 weg umbiegen, in Richtung der Oberfläche 22 verlaufen und in einem vorzugsweise spitzen Winkel auf die Oberfläche 22 auftreffen.

Daraus ist zu erkennen, daß die Isothermen I1 bis I15 in dem radial außen liegenden Bereich R zu einem parallel zur Oberfläche 22 verlaufenden Temperaturgradienten führen und somit zu thermischen Spannungen im Festkörper 12, welche, je nach Materialbeschaffenheit des Festkörpers 12, dazu führen können, daß dieser aufgrund thermischer Spannungen bricht, insbesondere da nahe der Kühloberfläche 14 in Richtung derselben kein Temperaturgradient auftritt.

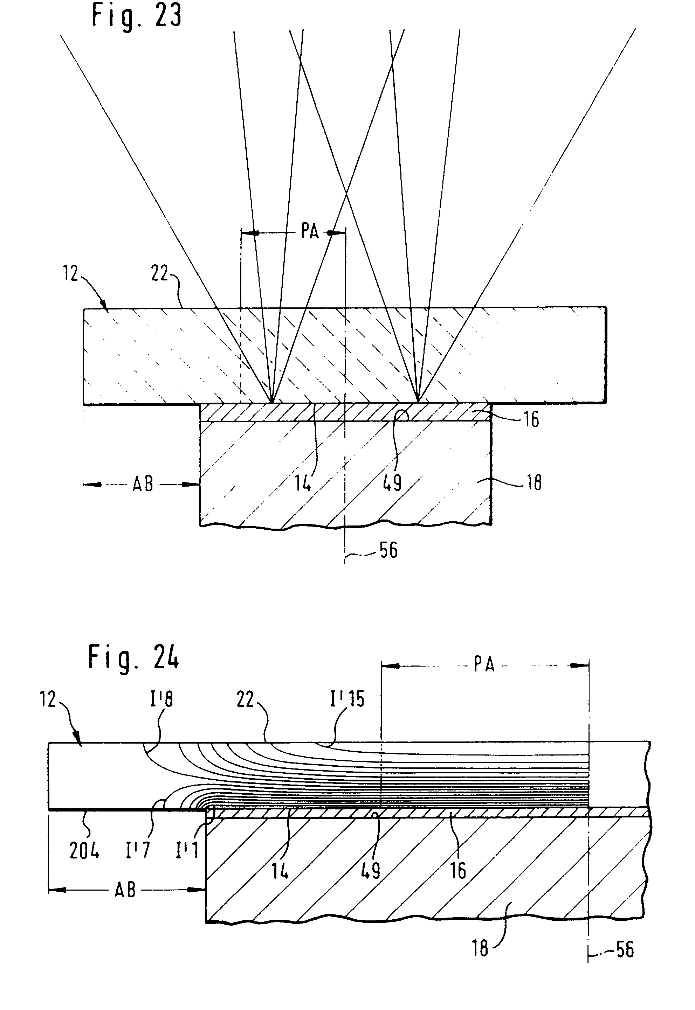

Zur Vermeidung oder Reduzierung eines derartigen einseitigen, sich parallel zur Oberfläche 22 ausbildenden Temperaturgradienten, wird, wie in Fig. 23 dargestellt, der Festkörper 12 so ausgebildet, daß er sich mit einem Außenbereich AB in radialer Richtung zur Achse 56 über die Kühloberfläche 14 hinaus erstreckt und in diesem Außenbereich AB nicht gekühlt ist.

Vorzugsweise erstreckt sich die Kühlfläche 14 auf der der Oberfläche 22 gegenüberliegenden Seite geringfügig über den vom Pumplicht 32 angeregten Bereich PA in radialer Richtung zur Achse 56 hinaus, so daß der Radius der Kühloberfläche 14 relativ zur Achse 56 größer ist als der des vom Pumplicht angeregten Bereichs PA.

Die sich für diese Variante des siebten Ausführungsbeispiels ergebenden Isothermen I'1 bis I'15, mit I'1 < I'15, verlaufen in gleicher Weise wie in der Grundform des siebten Ausführungsbeispiels innerhalb des vom Pumplicht angeregten Bereichs PA parallel zueinander, aufgrund des außenliegenden Bereichs AB des Festkörpers 12 biegen die Isothermen I'1 bis I'7 in Richtung einer in Fortsetzung der Kühloberfläche 14 und in derselben Ebene liegenden Oberfläche 204 des Außenbereichs AB um und verlaufen in einem spitzen Winkel zu dieser. Ferner biegen die Isothermen I'8 bis I'15 in Richtung der Oberfläche 22 um und verlaufen nahe derselben in einer Richtung parallel zu dieser.

Somit tritt sowohl nahe der Oberfläche 22 ein parallel zu dieser gerichteter Temperaturgradient auf als auch parallel zur Kühloberfläche 14 im Bereich der Oberfläche 204 ein parallel zu dieser gerichteter Gradient, so daß ein einseitiger Gradient, wie bei der Grundform des siebten Ausführungsbeispiels, vermieden wird. Somit sind die thermischen Spannungen im Festkörper 12 gemäß der ersten Variante des siebten Ausführungsbeispiels gleichmäßiger verteilt als die thermischen Spannungen im Festkörper 12 der Grundform des siebten Ausführungsbeispiels.

Eine derartige Vergleichmäßigung der thermischen Spannungen ist dadurch erreichbar, daß, wie bei der ersten Variante des siebten Ausführungsbeispiels in Fig. 23 und 24 dargestellt, die Kühloberfläche 14 auf der Reflektorschicht 16 aufliegt, der Festkörper 12 sich jedoch über diese in radialer Richtung zur Achse 56 hinauserstreckt. Ferner erstreckt sich die Reflektorschicht 16 über die gesamte Trägerfläche 49 des Kühlkörpers 18.

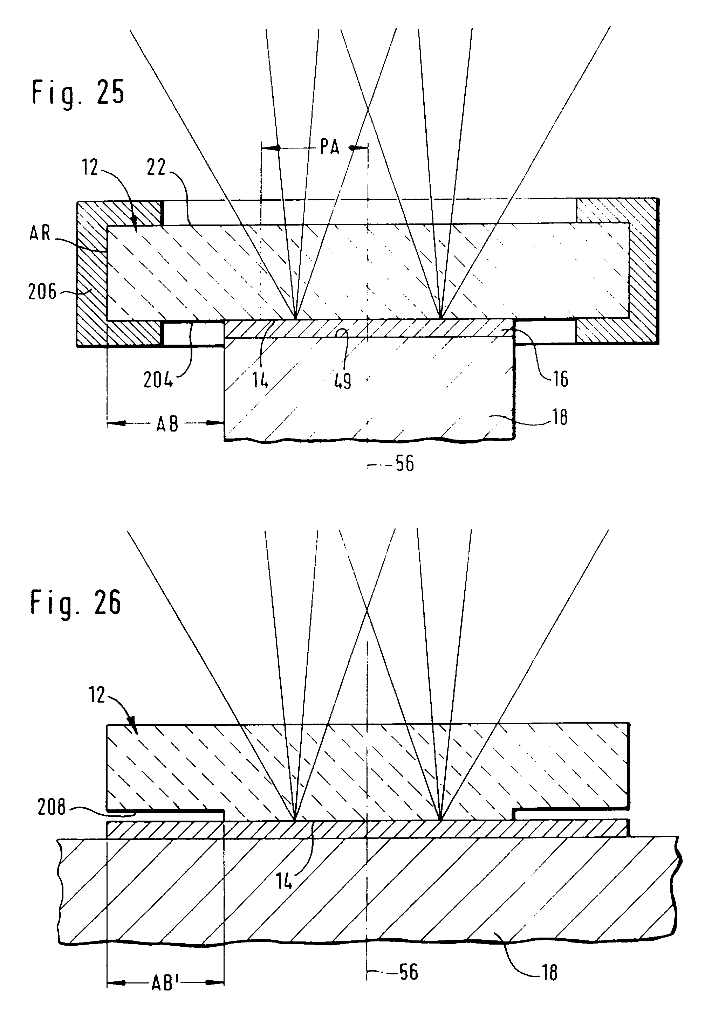

Bei einer zweiten Variante des siebten Ausführungsbeispiels, dargestellt in Fig. 25, ist der Kühlkörper 18 genau wie bei der ersten Variante ausgebildet und erstreckt sich mit dem Außenbereich AB über die Kühloberfläche 14 hinaus.

Um allerdings einen noch besseren Ausgleich thermischer Spannungen zu erhalten, ist der Festkörper 12 im Bereich seines äußeren Randes AR von einem Temperierring 206 umgriffen, welcher dem Festkörper 12 im Bereich seines Außenrandes AR Wärmeenergie zuführt und somit den Festkörper im Bereich seines Außenrandes AR aufheizt, um einen bis zum Außenrand AR reichenden Verlauf der Isothermen I' zu erreichen.

Der Temperierring 206 ist dabei beispielsweise durch ein Heizelement auf eine Temperatur vorgeheizt, die im Bereich der Temperatur der Isothermen I'7 und I'8 liegt, so daß diese bis zum Außenrand AR hin verlaufen und dadurch gleichzeitig eine Reduzierung des Temperaturgradienten zwischen I'1 und I'7 sowie I'8 und I'15 eintritt.

Das Heizen des Festkörpers kann auch über eine Bestrahlung der aufzuheizenden Bereiche, beispielsweise mit vom Festkörper gut absorbiertem Licht, erfolgen.

Die thermischen Spannungen können noch vorteilhafter vermieden werden, wenn der Temperierring 206 die Oberfläche 22 stärker erwärmt als die Oberfläche 204 und insbesondere die Oberfläche 204 auf einer Temperatur hält, die ungefähr im Bereich der Temperatur des Kühlkörpers 18 liegt.

Dabei ist es auch möglich, den Festkörper 12 mit der Kühloberfläche 14 vollflächig zu kühlen und nur auf der Oberfläche 22 im Bereich des Außenrandes AR zu heizen.

Alternativ zur zweiten Variante des siebten Ausführungsbeispiels ist bei einer dritten Variante, dargestellt in Fig. 26 der Festkörper 12 bezüglich der Achse 56 radial außerhalb der Kühloberfläche 14 mit einer gegenüber der Kühloberfläche 14 zurückgesetzten Stufe 208 versehen, so daß der Festkörper 12 ebenfalls einen Außenbereich AB' aufweist, welcher nicht in direktem körperlichem Wärmekontakt mit dem Kühlkörper 18 steht und somit sich bis zu höheren Temperaturen erwärmen kann. Auch dadurch ist ein Verlauf der Isothermen erreichbar, welcher ähnlich dem in Fig. 24 im Zusammenhang mit der ersten Variante dargestellten Verlauf ist.

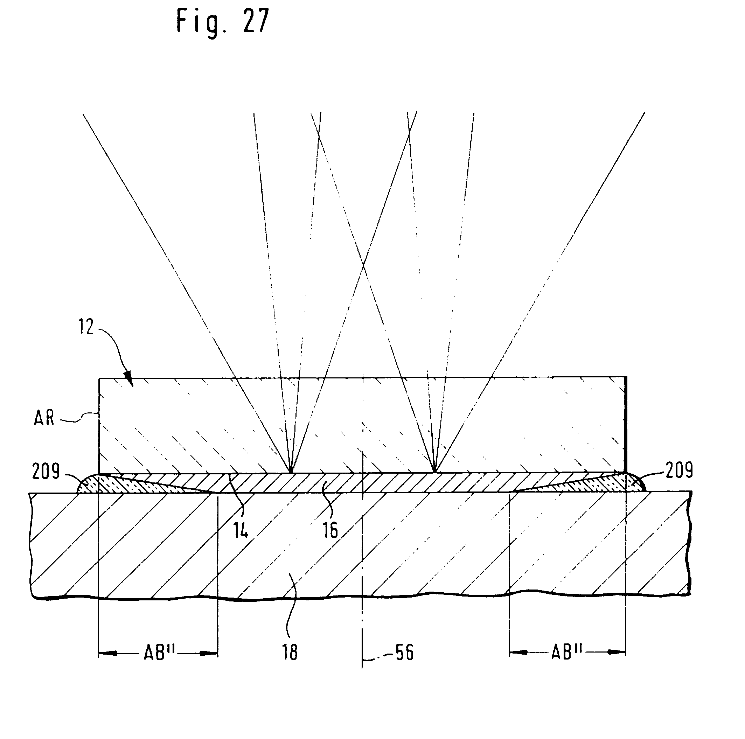

Bei einer vierten Variante des siebten Ausführungsbeispiels, dargestellt in Fig. 27, ist die direkt quer über die Reflektorschicht 16 körperlich mit dem Kühlkörper 18 thermisch gekoppelte Kühloberfläche 14 dadurch reduziert, daß die Dicke der Reflektorschicht 16 in einem bezüglich der Achse 56 radial außenliegenden Bereich AB" abnimmt, so daß ein zum Außenrand AR des Festkörpers 12 sich verbreitender Spalt 209 entsteht, welcher mit einem thermisch weniger gut als die Reflektorschicht leitenden Medium gefüllt ist, so daß die auf den Festkörper 12 von dem Kühlkörper 18 wirkende Kühlleistung in dem Außenbereich AB" kontinuierlich mit zunehmenden Abstand von der Achse 56 bis zum Außenrand AR hin abnimmt und somit ebenfalls eine Erwärmung des Festkörpers 12 in dem Außenbereich AB" möglich wird, welche wiederum dazu führt, daß die Isothermen gleichmäßiger verlaufen und ein parallel zur Oberfläche 22 verlaufender Temperaturgradient entweder betragsmäßig geringer ist als der bei der Grundform des siebten Ausführungsbeispiels oder nicht einseitig entsteht, sondern sich ähnlich dem in Fig. 24 bei der ersten Variante des siebten Ausführungsbeispiels ausbildenden und parallel zur Oberfläche 22 oder parallel zur Kühloberfläche 14 gerichteten Temperaturgradienten verhält. Alternativ dazu ist es auch möglich die Dicke der Reflektorschicht unverändert zu lassen und in dem Kühlkörper 18 entsprechende Ausnehmungen für den sich verbreiternden Spalt 209 im Bereich des Außenrandes AR vorzusehen.

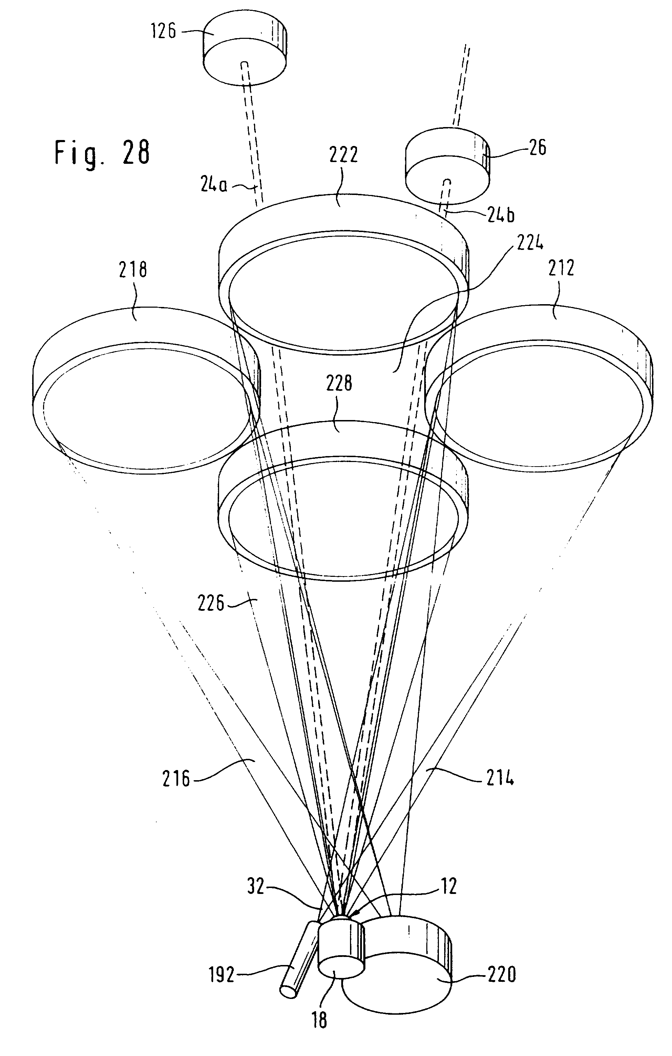

Bei einem achten Ausführungsbeispiel, dargestellt in Fig. 28, ist der Aufbau vom Prinzip her mit dem des siebten Ausführungsbeispiels gemäß Fig. 21 vergleichbar, es ist nur noch eine effektivere Anregung des Festkörpers 12 möglich.

Wie beim siebten Ausführungsbeispiels tritt aus dem Faserbündel 192 Pumplicht 32 aus, welches zunächst auf einen ersten Pumplichtspiegel 212 auftrifft, von diesem ersten Pumplichtspiegel 212 wird das Pumplicht 32 in Form eines Pumplichtstrahls 214 auf den Festkörper 12 reflektiert, durchdringt den Festkörper 12 bis zur Reflektorschicht 16 zwischen dem Festkörper 12 und dem Kühlkörper 18 und wird von der Reflektorschicht 16 in Form eines austretenden Strahls 216 auf einen zweiten Pumplichtspiegel 218 reflektiert, welcher den austretenden Strahl 216 auf einen Hilfsspiegel 220 auftreffen läßt, der seinerseits diesen austretenden Strahl 216 auf einen dritten Pumplichtspiegel 222 reflektiert, welcher dann seinerseits wiederum das Pumplicht in Form eines eintretenden Strahls 224 auf den Festkörper so reflektiert, daß dieses diesen durchdringt und von der Reflektorschicht 16 in Form eines austretenden Strahls 226 auf einen vierten Pumplichtspiegel 228 reflektiert wird, welcher den austretenden Strahl 226 wieder in sich zurückreflektiert, so daß dieser wiederum in den Festkörper 12 eintritt, diesen durchdringt, von der Reflektorschicht zum dritten Pumplichtspiegel 222 zurückreflektiert wird, von diesem zum Hilfsspiegel 220, von diesem zum zweiten Pumplichtspiegel 218, von letzterem wiederum zurück zum Festkörper 12 und von der Reflektorschicht 16 wiederum zurück zum ersten Pumplichtspiegel 212.

Mit diesem achten Ausführungsbeispiel ist es somit möglich, den Festkörper 12 achtfach zu durchstrahlen und somit eine optimale Ausnützung des aus dem Faserbündel 192 austretenden Pumplichts 32 zu erreichen.

Im übrigen kann das achte Ausführungsbeispiel ebenfalls entsprechend den im Zusammenhang mit dem siebten Ausführungsbeispiel beschriebenen Varianten weitergebildet werden.

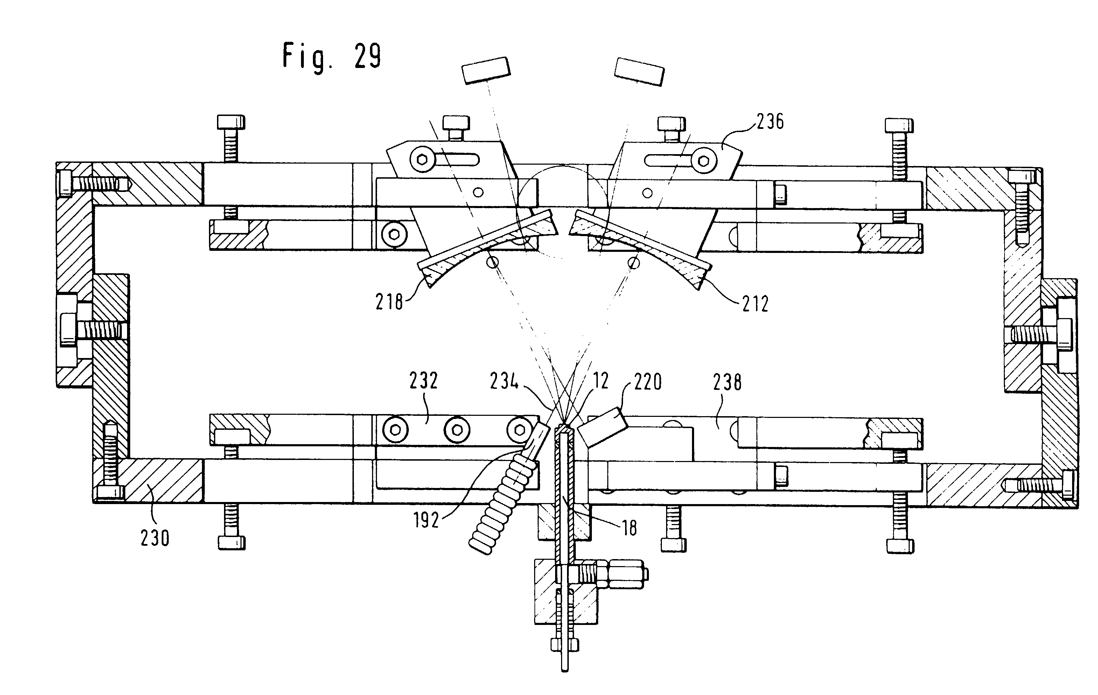

Der mechanische Aufbau, des in Fig. 28 dargestellten achten Ausführungsbeispiels umfaßt, wie im Teilschnitt in Fig. 29 dargestellt, ein Gehäuse 230, an welchem ein justierbarer Halter 232 für das Faserbündel 192 gehalten ist, womit eine Strahlrichtung 234 des aus dem Faserbündel 192 austretenden Pumplichts 32 justierbar ist.

Ferner ist an dem Gehäuse 230 jeweils ein justierbarer Halter 236 für jeden der Pumplichtspiegel 212, 218, 222 und 228 gehalten. Mit diesen justierbaren Haltern 236 sind die Pumplichtspiegel 212, 218, 222, 228 so justierbar, daß der im Zusammenhang mit Fig. 28 beschriebene Strahlenverlauf entsteht, wobei zusätzlich auch noch der Hilfsspiegel 220 seinerseits auf einem justierbaren Halter 238 sitzt und somit ebenfalls gegenüber dem Gehäuse 230 justierbar ist.

Nicht justierbar gegenüber dem Gehäuse 230 ist der auf dem Kühlkörper 18 sitzende Festkörper 12, vielmehr wird der gesamte Strahlenverlauf relativ zu diesem Festkörper 12 mit den einzelnen Haltern 232, 236 und 238 justiert.

Ferner ist auch bei dem achten Ausführungsbeispiel ein gefalteter Laserresonator vorgesehen, welcher genau wie beim siebten Ausführungsbeispiel die beiden Endspiegel 26 und 126 umfaßt und ein Laserstrahlungsfeld 24 bildet, welches aus den beiden Ästen 24a und 24b als gefaltetes Laserstrahlungsfeld ausgebildet ist.

Dieses Laserstrahlungsfeld 24 durchsetzt, wie beim siebten Ausführungsbeispiel bereits beschrieben, den Festkörper 12 vierfach, um eine möglichst effektive Einkopplung zu erhalten.

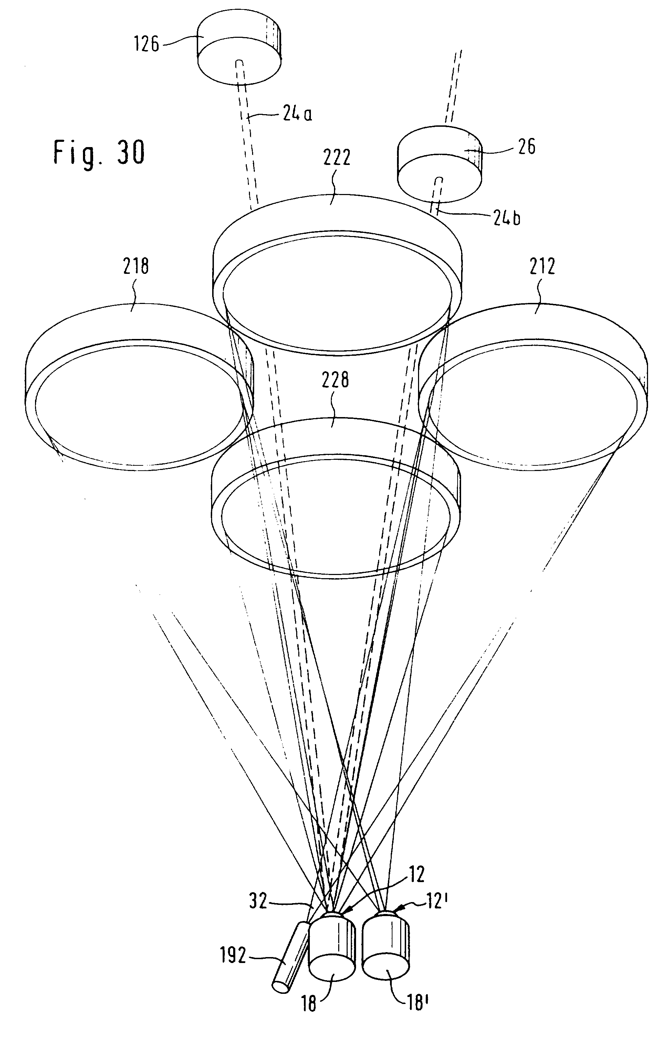

Bei einem neunten Ausführungsbeispiel, dargestellt in Fig. 30, entspricht der Aufbau im wesentlichen dem des achten Ausführungsbeispiels gemäß Fig. 28, mit dem Unterschied, daß anstelle des Hilfsspiegels 220 ein weiterer Festkörper 12' mit einer zeichnerisch nicht dargestellten Reflektorschicht 16' vorgesehen ist, welcher auf einem Kühlkörper 18' sitzt, so daß mit demselben, aus dem Faserbündel 192 austretenden Pumplicht 32 die Anregung zweier Festkörper 12 und 12' möglich ist, die dann beide eine Lasertätigkeit aufnehmen. Aus Gründen der Übersichtlichkeit ist in Fig. 30 der für den zweiten Festkörper 12' vorgesehene Resonator mit dem entsprechenden Strahlungsfeld 24 nicht dargestellt, dieser ist jedoch gleich aufgebaut, wie der das Resonatorstrahlungsfeld 24a und 24b folgende Resonator mit den Spiegeln 26 und 126.

Im übrigen ist das neunte Ausführungsbeispiel in gleicher Weise ausgebildet wie das achte Ausführungsbeispiel, so daß hierauf vollinhaltlich Bezug genommen werden kann.

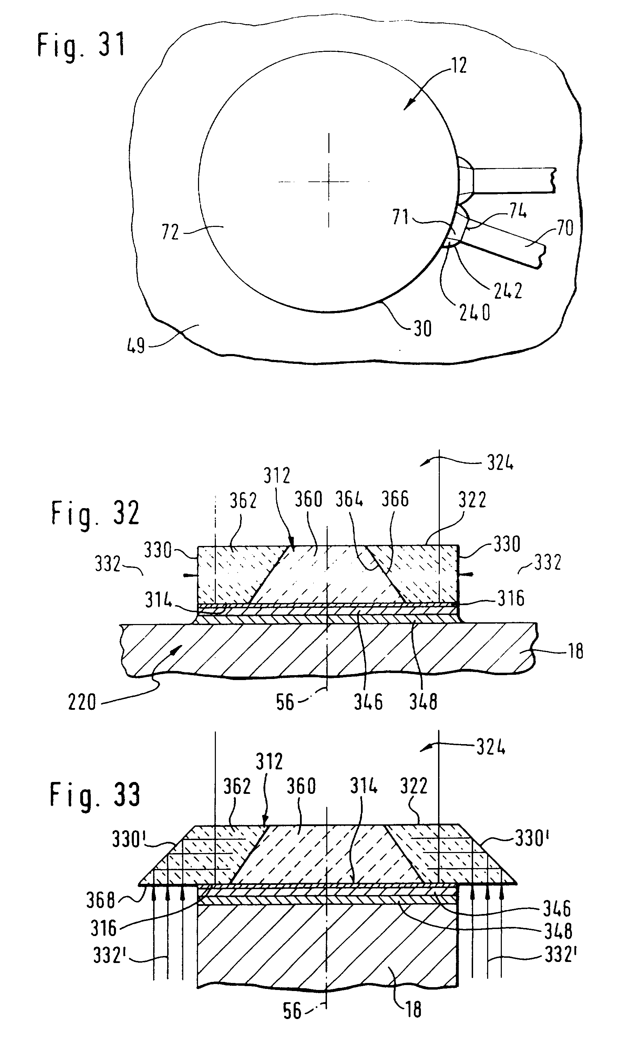

Bei einem zehnten Ausführungsbeispiel, schematisch dargestellt in Fig. 31, ist zwischen dem kristallnahen Ende 74 des jeweiligen Lichtleiters 70 und der Seitenfläche 30 des Kristalls 12 ein Brechungsindex adaptierendes Material 240 vorgesehen, welches einen Brechungsindex aufweist, der zwischen dem der Lichtleiter 70 und des Kristalls 12 liegt.

Mit diesem brechungsindexadaptierenden Material 240 ist einerseits die Divergenz des aus dem kristallnahen Ende austretenden Kegels 71 des Pumplichts 32 begrenzbar und andererseits führt das brechungsindexadaptierende Material 240 dazu, daß in der Ebene 72 keine an den Seitenflächen 30 reflektierte Pumplichtstrahlung auftreten kann, wie dies beispielsweise bei den voranstehenden Ausführungsbeispielen der Fall sein könnte, denn die Pumplichtstrahlung kann an den Bereichen der Seitenflächen, an denen das brechungsindexadaptierende Material 240 an diesen anliegt, nicht mehr durch Totalreflexion reflektiert werden, sondern dringt in das brechungsindexadaptierende Material 240 ein und kann lediglich an dessen der Umgebung zugewandten Außenflächen 242 reflektiert werden. Damit besteht aber keine Möglichkeit mehr, daß eine zirkulare Reflexion in der Ebene 72 erfolgt und somit eine Ausbildung eines unerwünschten Laserstrahlungsfeldes in dieser Ebene, was bei den voranstehenden Ausführungsbeispielen der Fall sein kann.

Im übrigen wird hinsichtlich der weiteren Merkmale des zehnten Ausführungsbeispiels auf die Ausführungen zum ersten Ausführungsbeispiel Bezug genommen.

Bei einem elften Ausführungsbeispiel, schematisch dargestellt in Fig. 32, ist der Kristall 312 in gleicher Weise wie beim ersten Ausführungsbeispiel auf dem Kühlelement 220 angeordnet.

Dabei tritt das Laserstrahlungsfeld 324 in gleicher Weise wie beim ersten Ausführungsbeispiel durch die Oberfläche 322 hindurch und wird durch die Reflektorschicht 316 reflektiert.

Die Einkopplung des Pumplichts 332 erfolgt ebenfalls über zwei einander gegenüberliegende Seitenflächen 330.

Im Gegensatz zum ersten Ausführungsbeispiel umfaßt der Kristall 312 einen Innenbereich 360, welcher mit der laseraktiven Substanz dotiert ist und einen Außenbereich 362, welcher laserinaktiv und für die Laserstrahlung nicht absorbierend ist. Insbesondere weisen beide Bereiche gleiche thermische und optische Eigenschaften auf.

Der Außenbereich 362 wird beispielsweise mit seiner Innenfläche 364 auf eine Außenfläche 366 des Innenbereichs 360 aufgebondet, so daß ein spaltfreier Übergang zwischen dem Innenbereich 360 und dem Außenbereich 362 besteht.

Ferner verlaufen die Innenfläche 364 und die Außenfläche 366 vorzugsweise im Brewsterwinkel zur Kühloberfläche 314 des Kristalls 312.

Das Laserstrahlungsfeld 324 durchsetzt dabei nicht nur den Innenbereich 360, sondern auch zumindest teilweise noch den Außenbereich 362, woraus eine bessere Modenstruktur beim Einsatz des erfindungsgemäßen Laserverstärkersystems in einem Resonator eines Lasersystems erhältlich ist.

Darüber hinaus schafft die Unterteilung des Kristalls 312 in einen Innenbereich 360 und einen Außenbereich 362 ferner noch die Möglichkeit, sich in der Ebene 72 durch Reflexion ausbildende Laserstrahlung zu unterdrücken.

Im übrigen kann der Kristall 312 gemäß dem elften Ausführungsbeispiel führungsbeispiel bei allen voranstehenden anstelle des Kristalls 12 eingesetzt werden.

Aus diesem Grund gilt für das elfte Ausführungsbeispiel alles was im Zusammenhang mit den ersten zehn Ausführungsbeispielen gesagt wurde.

Bei einer Variante des elften Ausführungsbeispiels, dargestellt in Fig. 33 sind die Seitenflächen 330' gegenüber der Kühloberfläche 314 geneigt und stellen Reflexionsflächen für seitlich, beispielsweise senkrecht zur Kühloberfläche und neben dieser herangeführtes Pumplicht 332' dar, wobei dieses Pumplicht 332' von einer in Fortsetzung der Kühloberfläche 314 angeordneten Unterseite 368 des Außenbereichs 362 des Kristalls 312 in den Außenbereich 362 eintritt und an den Seitenflächen 330' in Richtung des Innenbereichs 360 reflektiert wird, wobei sich das Pumplicht 332 ebenfalls, wie beispielsweise im Zusammenhang mit dem zweiten Ausführungsbeispiel beschrieben, im Wege der Totalreflexion an der Oberfläche 322 und der Kühloberfläche 314 und teilweise der Unterseite 368 in dem Kristall 312 ausbreitet und dabei den laseraktiven Innenbereich 360 so durchsetzt, daß die laseraktiven Atome oder Moleküle dieses Innenbereichs 360 gepumpt werden.

Der Vorteil dieser Variante des elften Ausführungsbeispiels ist darin zu sehen, daß das Pumplicht 332' im wesentlichen parallel zur Achse 56 des Kühlkörpers 18 zuführbar ist.

Das Laserstrahlungsfeld 324 durchsetzt in gleicher Weise, wie in Fig. 32 dargestellt, nicht nur den Innenbereich 360 sondern zumindest Teile des Außenbereichs 362 und wird an der reflektierenden Schicht 316 reflektiert.

Damit ist bei der in Fig. 33 dargestellten Variante des elften Ausführungsbeispiels die Möglichkeit geschaffen, das erfindungsgemäße Konzept in radialer Richtung zur Achse 56 des Kühlkörpers 18 raumsparend zu realisieren.

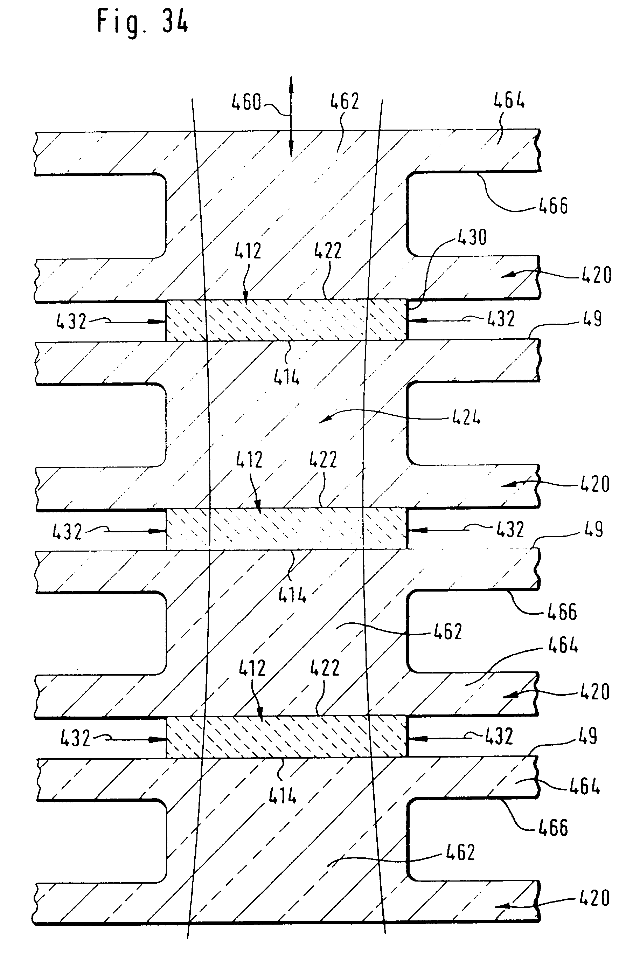

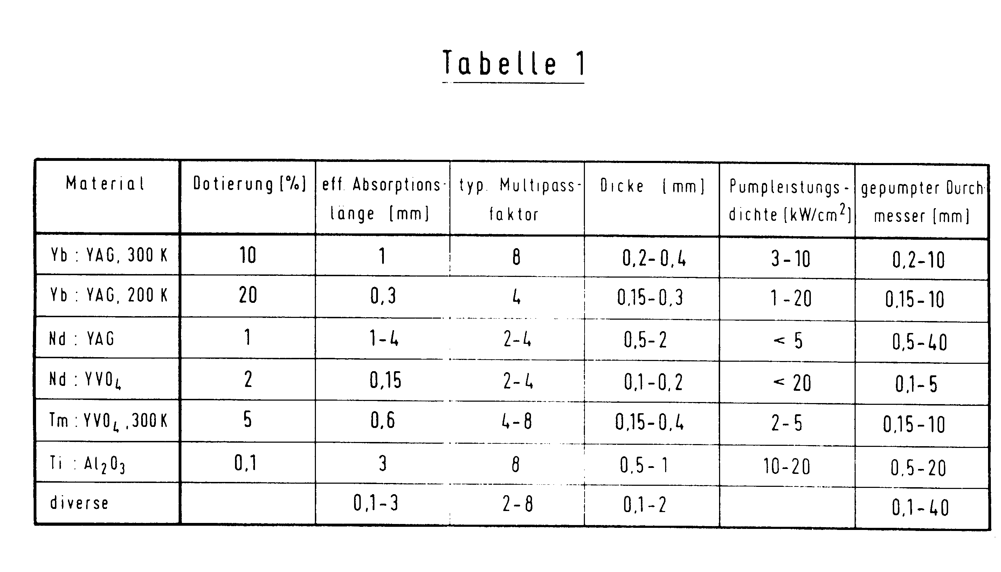

Bei einem zwölften Ausführungsbeispiel, dargestellt in Fig. 34 sind mehrere Kristalle 412 mit ihren Kühloberflächen 414 parallel zueinander mit Abstand angeordnet, wobei jeweils zwischen zwei Kristallen 412 ein Kühlelement 420 angeordnet ist, das einerseits auf der Kühloberfläche 414 des einen Kristalls 412 aufliegt und andererseits auf der Oberfläche 422 des anderen Kristalls, so daß sich die Kühlelemente 420 und die Kristalle 412 miteinander abwechseln.

Hierzu sind die Kühlelemente 420 aus einem wärmeleitfähigen und transparenten Material, beispielsweise Siliziumkarbid hergestellt.

Ein Laserstrahlungsfeld 424 breitet sich dabei in einer Richtung zu den Oberflächen 414 und 422 aus, die jeweils untereinander parallel ausgerichtet sind.

Die Kühlelemente 420 sind in einem mittleren, von dem Laserstrahlungsfeld 424 durchsetzten Bereich 462 homogen transparent und weisen lediglich in sich an diesen seitlich anschließenden Außenbereichen 464 Ausnehmungen 466 zur Führung von Kühlmedium, beispielsweise Kühlwasser, auf.

Alternativ dazu kann das transparente Kühlelement in einem Ring angeordnet sein, der die Ausnehmung für das Kühlmedium aufweist.

Darüber hinaus erfolgt zwischen den Kühlelementen 420 eine Einkopplung von Pumplicht 432 über die Seitenflächen 430 der Kristalle 414 gemäß einer der vorstehend beschriebenen Ausführungsbeispiele.

Bei dem elften Ausführungsbeispiel besteht durch die Außenbereiche 362 die Möglichkeit, diese so zu dotieren, daß sie Licht eines Heizstrahlers, beispielsweise einer Heizlampe, gut absorbieren, so daß sich dieses Ausführungsbeispiel besonders vorteilhaft für eine im Zusammenhang mit dem siebten Ausführungsbeispiel gemäß Fig. 23 bis 27 beschriebene Temperierung eines Außenbereichs AB eignet.

Im Gegensatz zu den vorstehend beschriebenen Ausführungsbeispielen durchsetzt bei dem zwölften Ausführungsbeispiel das Laserstrahlungsfeld 424 sowohl die Oberflächen 422 als auch die Kühloberflächen 414 aller Kristalle 412.

Das zwölfte Ausführungsbeispiel eines erfindungsgemäßen Laserverstärkersystems kann dabei entweder durch Vorsehen von Endspiegeln, welche in der Richtung 460 im Abstand voneinander angeordnet sind, als Laser ausgebildet sein oder auch als Laserverstärker, welcher ein diesen durchsetzendes Laserstrahlungsfeld 424 verstärkt.

Vorzugsweise sind bei allen vorstehend beschriebenen Ausführungsbeispielen die Kristalle ytterbiumdotierte Kristalle, vorzugsweise Ytterbium-YAG oder Ytterbium-FAP.

Eine Zusammenstellung aller vorteilhafterweise bei den vorstehend genannten Ausführungsbeispielen von erfindungsgemäßen Laserkonzepten verwendeten Materialien für die erfindungsgemäßen Festkörper ist in der Tabelle 1 dargestellt, wobei zu jedem Material für einen erfindungsgemäßen Festkörper die Dotierung, die effektive Absorptionslänge, der Multipassfaktor, das heißt die Zahl der möglichen Durchgänge des Pumplichts durch den Festkörper, die bevorzugterweise verwendete Dicke des Festkörpers, das heißt der Abstand zwischen der Kühloberfläche 14 und der Oberfläche 22, die Pumpleistungsdichte des Pumplichts 32 und der gepumpte Durchmesser, das heißt der Durchmesser des vom Pumplicht 32 durchsetzten Bereichs PA angegeben ist.

## Patentansprüche

1. Laserverstärkersystem mit einem in einem Laserstrahlungsfeld angeordneten Festkörper, welcher ein laseraktives Material umfaßt, und mit einer Pumplichtquelle zum Pumpen des laseraktiven Materials, **dadurch gekennzeichnet,** daß der Festkörper (12, 212, 312, 412) eine Kühloberfläche (14, 214, 314, 414) aufweist, daß der Festkörper (12, 212, 312, 412) über die Kühloberfläche (14, 214, 314, 414) in diesem entstehende Wärme flächenhaft auf ein massives Kühlelement (20, 220, 320, 420) ableitet, so daß in dem Festkörper (12, 212, 312, 412) ein Temperaturgradient in Richtung (42) auf die Kühloberfläche (14, 214, 314, 414) entsteht, daß das massive Kühlelement (20, 220, 320, 420) einen Träger für den Festkörper (12, 212, 312, 412) bildet und daß das Laserstrahlungsfeld (24, 224, 324, 424) sich ungefähr parallel zu dem Temperaturgradient im Festkörper (12, 212, 312, 412) ausbreitet.

2. Laserverstärkersystem nach Anspruch 1, dadurch gekennzeichnet, daß das Kühlelement (20, 220, 320, 420) aus einem Material mit einer Wärmeleitfähigkeit ist, welche größer als die Wärmeleitfähigkeit des Festkörpers (12, 212, 312, 412) ist.

3. Laserverstärkersystem nach Anspruch 1 oder 2, dadurch gekennzeichnet, daß das Kühlelement (20, 220, 320, 420) in einem an den Festkörper (12, 212, 312, 412) angrenzenden Bereich senkrecht zur Kühloberfläche (14, 214, 314, 414) eine Dicke aufweist, welche größer ist als der Quotient aus der Fläche der Kühloberfläche (14, 214, 314, 414) dividiert durch deren Umfang (AU).

4. Laserverstärkersystem nach einem der voranstehenden Ansprüche, dadurch gekennzeichnet, daß das Kühlelement (20, 220, 320, 420) eine Trägerfläche (49) für den Festkörper (12, 212, 312, 412) aufweist, welche größer als die Kühloberfläche (14, 214, 314, 414) ist.

5. Laserverstärkersystem nach einem der voranstehenden Ansprüche, dadurch gekennzeichnet, daß die Kühloberfläche (14, 214, 314, 414) in einer ersten Richtung (40) eine Dimension aufweist, die größer ist als eine senkrecht zur Kühloberfläche (14, 214, 314, 414) gemessene Dicke (D) des Festkörpers (12, 212, 312, 412).

6. Laserverstärkersystem nach Anspruch 5, dadurch gekennzeichnet, daß der Festkörper (12, 212, 312, 412) plättchenförmig ausgebildet ist und mit mindestens einer Plättchenober- oder -unterseite als Kühloberfläche (14, 214, 314, 414) auf dem Kühlelement (20, 220, 320,, 420) aufliegt.

7. Laserverstärkersystem nach einem der voranstehenden Ansprüche, dadurch gekennzeichnet, daß der Festkörper (12, 212, 312, 412) die in diesem entstehende Wärme von der Kühloberfläche (14, 214, 314, 414) vollflächig auf das Kühlelement (20, 220, 320, 420) ableitet.

8. Laserverstärkersystem nach einem der voranstehenden Ansprüche, dadurch gekennzeichnet, daß das Kühlelement (20, 220, 320, 420) eine von einem Kühlmedium kontaktierte wärmeabgebende Fläche (50, 52, 68) aufweist, welche ein Vielfaches der Fläche der Kühloberfläche (14, 214, 314, 414) beträgt.

9. Laserverstärkersystem nach einem der voranstehenden Ansprüche, dadurch gekennzeichnet, daß das Kühlelement (120, 420) für das Laserstrahlungsfeld (24, 424) transparent ausgebildet ist.

10. Laserverstärkersystem nach Anspruch 9, dadurch gekennzeichnet, daß das Kühlelement (120, 420) und der Festkörper (12, 412) in einer Richtung (42) quer zur Kühloberfläche (14, 414) von dem Laserstrahlungsfeld (24, 424) durchsetzt sind.

11. Laserverstärkersystem nach Anspruch 9 oder 10, dadurch gekennzeichnet, daß das Laserstrahlungsfeld (424) eine Vielzahl aufeinanderfolgender Festkörper (412) durchsetzt und daß jeweils zwischen den aufeinanderfolgenden Festkörpern (412) ein Kühlelement (420) angeordnet ist.

12. Laserverstärkersystem nach einem der voranstehenden Ansprüche, dadurch gekennzeichnet, daß auf der Seite des Festkörpers (12), auf welcher dieser die Kühloberfläche (14, 314) trägt, ein Reflektor (16, 316) für das Laserstrahlungsfeld (24, 324) angeordnet ist.

13. Laserverstärkersystem nach Anspruch 12, dadurch gekennzeichnet, daß der Festkörper (12, 312) mit der Kühloberfläche (14, 314) an dem Reflektor (16, 316) für das Laserstrahlungsfeld (24, 324) vollflächig anliegt.

14. Laserverstärkersystem nach Anspruch 13, dadurch gekennzeichnet, daß über den Reflektor (16, 316) eine flächenhafte Wärmeeinleitung in einen Kühlkörper (18, 318) des Kühlelements (20, 320) erfolgt.

15. Laserverstärkersystem nach einem der Ansprüche 13 oder 14, dadurch gekennzeichnet, daß der Reflektor (16, 316) eine auf die Kühloberfläche (14, 314) aufgetragene Reflektorschicht ist.

16. Laserverstärkersystem nach einem der Ansprüche 12 bis 15, dadurch gekennzeichnet, daß das Laserstrahlungsfeld (24, 324) von einer der Kühloberfläche (14, 314) gegenüberliegenden Oberfläche (22, 322) des Festkörpers (12, 312) in diesen eintritt.

17. Laserverstärkersystem nach einem der voranstehenden Ansprüche, dadurch gekennzeichnet, daß der Festkörper (12, 312, 412) eine quer zur Kühloberfläche (14, 314, 414) verlaufende Seitenfläche (30, 330, 430) aufweist, über welche eine Einkopplung des Pumplichts (32, 332, 432) erfolgt.

18. Laserverstärkersystem nach einem der voranstehenden Ansprüche, dadurch gekennzeichnet, daß das Pumplicht (32, 332, 432) in dem Festkörper (12, 312, 412) durch Reflexion geführt ist.

19. Laserverstärkersystem nach Anspruch 18, dadurch gekennzeichnet, daß das Pumplicht (32, 332, 432) in dem Festkörper (12, 312, 412) ungefähr parallel zur Kühloberfläche (14, 314, 414) geführt ist.

20. Laserverstärkersystem nach Anspruch 19, dadurch gekennzeichnet, daß das Pumplicht (32, 332, 432) in dem Festkörper (12, 312, 412) durch die Kühloberfläche (14, 314, 414) und eine der Kühloberfläche gegenüberliegende Oberfläche (22, 322, 422) geführt ist.

21. Laserverstärkersystem nach einem der Ansprüche 18 bis 20, dadurch gekennzeichnet, daß das Pumplicht (32, 332, 432) in dem Festkörper (12, 312, 412) durch Totalreflexion geführt ist.

22. Laserverstärkersystem nach Anspruch 21, dadurch gekennzeichnet, daß die Divergenz des Pumplichts (32, 332, 432) im Festkörper (12, 312, 412) so groß ist, daß das Pumplicht (32, 332, 432) in einem Winkel nahe dem Grenzwinkel der Totalreflexion auf die dieses führende Oberflächen (14, 314, 414; 22, 322, 422) des Festkörpers ( 12, 312, 412) auftrifft.

23. Laserverstärkersystem nach einem der voranstehenden Ansprüche, dadurch gekennzeichnet, daß die Einkopplung des Pumplichts (32) über eine der Kühloberfläche (14) gegenüberliegende Oberfläche (22) erfolgt.

24. Laserverstärkersystem nach Anspruch 23, dadurch gekennzeichnet, daß auf der Seite des Festkörpers (12), auf welcher die Kühloberfläche (14) liegt, ein Reflektor (16) für das Pumplicht (32) vorgesehen ist.

25. Laserverstärkersystem nach Anspruch 24, dadurch gekennzeichnet, daß der Reflektor (16) für das Laserstrahlungsfeld (24) und der Reflektor (16) für das Pumplicht (32) miteinander identisch sind.

26. Laserverstärkersystem nach einem der Ansprüche 24 oder 25, dadurch gekennzeichnet, daß das Pumplicht (32) den Festkörper (12) mindestens zweifach durchsetzt.

27. Laserverstärkersystem nach Anspruch 26, dadurch gekennzeichnet, daß der vom Reflektor (16) reflektierte Pumplichtstrahl (198) wiederum durch einen Spiegel (202) in den Festkörper (12) zurück auf den Reflektor (16) reflektiert wird.

28. Laserverstärkersystem nach einem der Ansprüche 12 bis 27, dadurch gekennzeichnet, daß der Reflektor (16, 316) durch eine unmittelbar auf der Kühloberfläche (14, 314) des Festkörpers (12, 312) aufgebrachte hochreflektierende Reflektorschicht gebildet ist.

29. Laserverstärkersystem nach Anspruch 28, dadurch gekennzeichnet, daß auf der dem Festkörper (12, 312) gegenüberliegenden Seite der Reflektorschicht (16, 316) eine Metallisierung (46) aufgebracht ist.

30. Laserverstärkersystem nach Anspruch 29, dadurch gekennzeichnet, daß die Metallisierung (46) mit flächenhaftem Wärmekontakt mit dem Kühlkörper (18) verbunden ist.

31. Laserverstärkersystem nach Anspruch 29 oder 30, dadurch gekennzeichnet, daß die Metallisierung (46) mittels eines weichen Metalls (48) mit dem Kühlkörper (18) verbunden ist.

32. Laserverstärkersystem nach einem der voranstehenden Ansprüche, dadurch gekennzeichnet, daß das Laserverstärkersystem in Ebenen (72) parallel zur Kühloberfläche (49) für ein Laserstrahlungsfeld resonatorfrei ausgebildet ist.

33. Laserverstärkersystem nach Anspruch 32, dadurch gekennzeichnet, daß angrenzend an die Seitenflächen (30, 330) ein brechungsindexadaptierendes Material (210) vorgesehen ist.

34. Laserverstärkersystem nach Anspruch 33, dadurch gekennzeichnet, daß der Festkörper (312) einen das laseraktive Material aufweisenden Innenbereich (360) und einen vom laseraktiven Material freien Außenbereich (362) aufweist.

35. Laserverstärkersystem nach Anspruch 34, dadurch gekennzeichnet, daß der Außenbereich (362) ein Material mit demselben Brechungsindex wie der Innenbereich (360) aufweist.

36. Laserverstärkersystem nach Anspruch 34 oder 35, dadurch gekennzeichnet, daß der Außenbereich (362) und der Innenbereich (360) durch Bonden miteinander verbunden sind.

37. Laserverstärkersystem nach einem der voranstehenden Ansprüche, dadurch gekennzeichnet, daß die Pumplichtquelle (34) eine oder mehrere Laser- oder Superstrahlungsdioden umfaßt.

38. Laserverstärkersystem nach Anspruch 37, dadurch gekennzeichnet, daß das Pumplicht (32, 332, 432) der Laser- oder Superstrahlungsdiode (34) mit einem Lichtleiter (70) zum Festkörper (12, 312, 412) geführt ist.

39. Laserverstärkersystem nach einem der voranstehenden Ansprüche, dadurch gekennzeichnet, daß die vom Pumplicht (32, 332, 432) durchsetzte Oberfläche (22, 30, 330, 430) des Festkörpers (12, 312, 412) mit einer Antireflexbeschichtung (38) versehen ist.

40. Laserverstärkersystem nach einem der voranstehenden Ansprüche, dadurch gekennzeichnet, daß die vom Laserstrahlungsfeld (24, 324, 424) durchsetzte Oberfläche (22, 322, 422) des Festkörpers (12, 312, 412) mit einer Antireflexbeschichtung (36) versehen ist.

41. Laserverstärkersystem nach einem der voranstehenden Ansprüche, dadurch gekennzeichnet, daß das Laserstrahlungsfeld (24, 424) mehrere der erfindungsgemäßen Festkörper (12, 412) durchsetzt.

42. Laserverstärkersystem nach Anspruch 41, dadurch gekennzeichnet, daß in dem Laserverstärkersystem das Laserstrahlungsfeld (24) mehreren Reflexionen unterworfen ist und daß im Bereich von mehreren dieser Reflexionen ein Festkörper (12) angeordnet ist.

43. Laserverstärkersystem nach Anspruch 42, dadurch gekennzeichnet, daß die Reflexionen jeweils an einem Reflektor (16) erfolgen, welcher von einem Kühlelement (20) für den jeweiligen Festkörper (12) umfaßt ist.

44. Laserverstärkersystem nach einem der voranstehenden Ansprüche, dadurch gekennzeichnet, daß dieses mit einem Resonator (28) zu einem Lasersystem kombiniert ist.

45. Laserverstärkersystem nach einem der voranstehenden Ansprüche, dadurch gekennzeichnet, daß der Temperaturgradient im Festkörper (12) in dem vom Laserstrahlungsfeld (24) durchsetzten Bereich quer zur Ausbreitungsrichtung des Laserstrahlungsfelds (24) im wesentlichen konstant ist.

46. Laserverstärkersystem nach einem der voranstehenden Ansprüche, dadurch gekennzeichnet, daß der Temperaturgradient im Festkörper (12) in dem vom Pumplicht (32) durchsetzten Bereich (PA) quer zur Ausbreitungsrichtung des Laserstrahlungsfelds (24) im wesentlichen konstant ist.

47. Laserverstärkersystem nach einem der voranstehenden Ansprüche, dadurch gekennzeichnet, daß der Festkörper (12) zu der Kühloberfläche (14) und der der Kühloberfläche (14) gegenüberliegenden Oberfläche (22) hin verlaufende Isothermen (I') aufweist.

48. Laserverstärkersystem nach Anspruch 47, dadurch gekennzeichnet, daß der Verlauf der Isothermen (I') außerhalb eines vom Pumplicht (32) durchsetzten Bereichs (PA) einen parallel zur Kühloberfläche (14) und nahe derselben verlaufenden oberflächennahen Gradienten aufweist, welcher in vergleichbarer Größenordnung wie ein parallel zu der der Kühloberfläche (14) gegenüberliegenden Oberfläche (22) und nahe derselben verlaufender oberflächennaher Gradient ist.

49. Laserverstärkersystem nach Anspruch 48, dadurch gekennzeichnet, daß die beiden oberflächennahen Gradienten im wesentlichen vergleichbar groß sind.

50. Laserverstärkersystem nach einem der voranstehenden Ansprüche, dadurch gekennzeichnet, daß sich der Festkörper (12) in Richtung parallel zur Kühloberfläche (14) mit einem Außenbereich (AB) über diese hinauserstreckt.

51. Laserverstärkersystem nach einem der voranstehenden Ansprüche, dadurch gekennzeichnet, daß sich die Kühloberfläche (14) in parallel zu dieser verlaufender Richtung mindestens über den vom Pumplicht (32) durchsetzten Bereich (PA) erstreckt.

52. Laserverstärkersystem nach Anspruch 51, dadurch gekennzeichnet, daß sich die Kühloberfläche (14) in parallel zu dieser verlaufender Richtung über den vom Pumplicht (32) durchsetzten Bereich (PA) hinauserstreckt.

53. Laserverstärkersystem nach einem der Ansprüche 50 bis 52, dadurch gekennzeichnet, daß der Festkörper (12) in einem außerhalb der Kühloberfläche (14) liegenden Bereichen (AB, AR) temperierbar ist.

54. Laserverstärkersystem nach Anspruch 53, dadurch gekennzeichnet, daß der Festkörper (12) in seinem außerhalb der Kühloberfläche (14) liegenden Bereich (AB, AR) auf eine einen Temperaturgradient parallel zur Kühloberfläche (14) oder der zu dieser parallelen Oberfläche (22) reduzierende Temperatur temperierbar ist.

55. Laserverstärkersystem nach Anspruch 53 oder 54, dadurch gekennzeichnet, daß der Festkörper (12) in einem außerhalb der Kühloberfläche (14) liegenden Bereich (AB, AR) auf eine über der Temperatur der Kühloberfläche (14) liegende Temperatur temperierbar ist.

56. Laserverstärkersystem nach einem der Ansprüche 53 bis 55, dadurch gekennzeichnet, daß der Festkörper (12) in einem außerhalb der Kühloberfläche (14) liegenden Bereich (AB, AR) heizbar ist.

## Claims

1. Laser amplifying system with a solid body arranged in a laser radiation field, said solid body comprising a laser-active material, and a pumping light source for pumping the laser-active material, characterized in that the solid body (12, 212, 312, 412) has a cooling surface (14, 214, 314, 414), that the solid body (12, 212, 312, 412) transfers heat created therein areally to a solid cooling element (20, 220, 320, 420) via the cooling surface (14, 214, 314, 414) so that a temperature gradient results in the solid body (12, 212, 312, 412) in a direction (42) towards the cooling surface (14, 214, 314, 414), that the solid cooling element (20, 220, 320, 420) forms a carrier for the solid body (12, 212, 312, 412), and that the laser radiation field (24, 224, 324, 424) propagates approximately parallel to the temperature gradient in the solid body (12, 212, 312, 412).

2. Laser amplifying system as defined in claim 1, characterized in that the cooling element (20, 220, 320, 420) is made from a material having a heat conductivity greater than the heat conductivity of the solid body (12, 212, 312, 412).

3. Laser amplifying system as defined in claim 1 or 2, characterized in that the thickness of the cooling element (20, 220, 320, 420) at right angles to the cooling surface (14, 214, 314, 414) in a region bordering on the solid body (12, 212, 312, 412) is greater than the quotient resulting from the area of the cooling surface (14, 214, 314, 414) divided by its circumference (AU).

4. Laser amplifying system as defined in any of the preceding claims, characterized in that the cooling element (20, 220, 320, 420) has a carrier surface (49) for the solid body (12, 212, 312, 412), said surface being larger than the cooling surface (14, 214, 314, 414).

5. Laser amplifying system as defined in any of the preceding claims, characterized in that the cooling surface (14, 214, 314, 414) has in a first direction (40) a dimension greater than a thickness (D) of the solid body (12, 212, 312, 414) measured at right angles to the cooling surface (14, 214, 314, 414).

6. Laser amplifying system as defined in claim 5, characterized in that the solid body (12, 212, 312, 412) is designed in the shape of a small plate and rests on the cooling element (20, 220, 320, 420) with at least one small-plate upper or lower side as cooling surface (14, 214, 314, 414).

7. Laser amplifying system as defined in any of the preceding claims, characterized in that the solid body (12, 212, 312, 412) transfers the heat created therein from the cooling surface (14, 214, 314, 414) over the entire surface to the cooling element (20, 220, 320, 420).

8. Laser amplifying system as defined in any of the preceding claims, characterized in that the cooling element (20, 220, 320, 420) has a heat-transferring surface (50, 52, 68) in contact with a cooling medium, said surface amounting to a multiple of the area of the cooling surface (14, 214, 314, 414).

9. Laser amplifying system as defined in any of the preceding claims, characterized in that the cooling element (120, 420) is designed to be transparent for the laser radiation field (24, 424).

10. Laser amplifying system as defined in claim 9, characterized in that the cooling element (120, 420) and the solid body (12, 412) are penetrated by the laser radiation field (24, 424) in a direction (42) transverse to the cooling surface (14, 414).

11. Laser amplifying system as defined in claim 9 or 10, characterized in that the laser radiation field (424) penetrates a plurality of consecutive solid bodies (412), and that a cooling element (420) is arranged each time between the consecutive solid bodies (412).

12. Laser amplifying system as defined in any of the preceding claims, characterized in that a reflector (16, 316) for the laser radiation field (24, 324) is arranged on the side of the solid body (12) bearing the cooling surface (14, 314).

13. Laser amplifying system as defined in claim 12, characterized in that the solid body (12, 312) rests with the cooling surface (14, 314) on the reflector (16, 316) for the laser radiation field (24, 324) over the entire surface.

14. Laser amplifying system as defined in claim 13, characterized in that heat is introduced areally into a cooling body (18, 318) of the cooling element (20, 320) via the reflector (16, 316).

15. Laser amplifying system as defined in one of claims 13 or 14, characterized in that the reflector (16, 316) is a reflector layer applied to the cooling surface (14, 314).

16. Laser amplifying system as defined in any of claims 12 to 15, characterized in that the laser radiation field (24, 324) enters the solid body (12, 312) from a surface (22, 322) of said solid body located opposite the cooling surface (14, 314).

17. Laser amplifying system as defined in any of the preceding claims, characterized in that the solid body (12, 312, 412) has a side surface (30, 330, 430) extending transversely to the cooling surface (14, 314, 414), the pumping light (32, 332, 432) being coupled in via said side surface.

18. Laser amplifying system as defined in any of the preceding claims, characterized in that the pumping light (32, 332, 432) is guided in the solid body (12, 312, 412) by reflection.

19. Laser amplifying system as defined in claim 18, characterized in that the pumping light (32, 332, 432) is guided in the solid body (12, 312, 412) approximately parallel to the cooling surface (14, 314, 414).

20. Laser amplifying system as defined in claim 19, characterized in that the pumping light (32, 332, 432) is guided in the solid body (12, 312, 412) by the cooling surface (14, 314, 414) and a surface (22, 322, 422) located opposite the cooling surface.

21. Laser amplifying system as defined in any of claims 18 to 20, characterized in that the pumping light (32, 332, 432) is guided in the solid body (12, 312, 412) by total reflection.

22. Laser amplifying system as defined in claim 21, characterized in that the divergence of the pumping light (32, 332, 432) in the solid body (12, 312, 412) is so great that the pumping light (32, 332, 432) impinges on the surfaces (14, 314, 414; 22, 322, 422) of the solid body (12, 312, 412) guiding said pumping light at an angle close to the limiting angle of the total reflection.

23. Laser amplifying system as defined in any of the preceding claims, characterized in that the pumping light (32) is coupled in via a surface (22) located opposite the cooling surface (14).

24. Laser amplifying system as defined in claim 23, characterized in that a reflector (16) for the pumping light (32) is provided on the side of the solid body (12) on which the cooling surface (14) is located.

25. Laser amplifying system as defined in claim 24, characterized in that the reflector (16) for the laser radiation field (24) and the reflector (16) for the pumping light (32) are identical to one another.

26. Laser amplifying system as defined in one of claims 24 or 25, characterized in that the pumping light (32) penetrates the solid body (12) at least twice.

27. Laser amplifying system as defined in claim 26, characterized in that the pumping light beam (198) reflected by the reflector (16) is again reflected back into the solid body (12) and onto the reflector (16) by a mirror (202).

28. Laser amplifying system as defined in any of claims 12 to 27, characterized in that the reflector (16, 316) is formed by a highly reflective reflector layer applied directly to the cooling surface (14, 314) of the solid body (12, 312).

29. Laser amplifying system as defined in claim 28, characterized in that a metal layer (46) is applied to the side of the reflector layer (16, 316) located opposite the solid body (12, 312).

30. Laser amplifying system as defined in claim 29, characterized in that the metal layer (46) is connected to the cooling body (18) with areal heat contact.

31. Laser amplifying system as defined in claim 29 or 30, characterized in that the metal layer (46) is connected to the cooling body (18) by means of a soft metal (48).

32. Laser amplifying system as defined in any of the preceding claims, characterized in that the laser amplifying system is designed to be resonator-free for a laser radiation field in planes (72) parallel to the cooling surface (49).

33. Laser amplifying system as defined in claim 32, characterized in that a material (210) adapting the refractive index is provided adjacent the side surfaces (30, 330).

34. Laser amplifying system as defined in claim 33, characterized in that the solid body (312) has an inner region (360) comprising the laser-active material and an outer region (362) free from the laser-active material.

35. Laser amplifying system as defined in claim 34, characterized in that the outer region (362) has a material with the same refractive index as the inner region (360).

36. Laser amplifying system as defined in claim 34 or 35, characterized in that the outer region (362) and the inner region (360) are connected with one another by bonding.

37. Laser amplifying system as defined in any of the preceding claims, characterized in that the pumping light source (34) comprises one or more laser or superradiation diodes.

38. Laser amplifying system as defined in claim 37, characterized in that the pumping light (32, 332, 432) of the laser or superradiation diode (34) is guided to the solid body (12, 312, 412) by a light guide (70).

39. Laser amplifying system as defined in any of the preceding claims, characterized in that the surface (22, 30, 330, 430) of the solid body (12, 312, 412) penetrated by the pumping light (32, 332, 432) is provided with an antireflective coating (38).

40. Laser amplifying system as defined in any of the preceding claims, characterized in that the surface (22, 322, 422) of the solid body (12, 312, 412) penetrated by the laser radiation field (24, 324, 424) is provided with an antireflective coating (36).

41. Laser amplifying system as defined in any of the preceding claims, characterized in that the laser radiation field (24, 424) penetrates a plurality of the inventive solid bodies (12, 412).

42. Laser amplifying system as defined in claim 41, characterized in that in the laser amplifying system the laser radiation field (24) is subjected to a plurality of reflections, and that a solid body (12) is arranged in the region of several of these reflections.

43. Laser amplifying system as defined in claim 42, characterized in that the reflections take place each time at a reflector (16) comprised by a cooling element (20) for the respective solid body (12).

44. Laser amplifying system as defined in any of the preceding claims, characterized in that this is combined with a resonator (28) to form a laser system.

45. Laser amplifying system as defined in any of the preceding claims, characterized in that the temperature gradient in the solid body (12) is essentially constant transversely to the direction of propagation of the laser radiation field (24) in the region penetrated by the laser radiation field (24).

46. Laser amplifying system as defined in any of the preceding claims, characterized in that the temperature gradient in the solid body (12) is essentially constant transversely to the direction of propagation of the laser radiation field (24) in the region (PA) penetrated by the pumping light (32).

47. Laser amplifying system as defined in any of the preceding claims, characterized in that the solid body (12) has isothermal lines (I') extending towards the cooling surface (14) and to the surface (22) located opposite the cooling surface (14).

48. Laser amplifying system as defined in claim 47, characterized in that the course of the isothermal lines (I') outside a region (PA) penetrated by the pumping light (32) has a gradient near the surface extending parallel to the cooling surface (14) and close thereto, said gradient being of a comparable dimension to a gradient near the surface extending parallel to the surface (22) opposite the cooling surface (14) and close thereto.

49. Laser amplifying system as defined in claim 48, characterized in that the two gradients near the surface are essentially of a comparable size.

50. Laser amplifying system as defined in any of the preceding claims, characterized in that the solid body (12) extends beyond the cooling surface (14) with an outer region (AB) in a direction parallel to the cooling surface.

51. Laser amplifying system as defined in any of the preceding claims, characterized in that the cooling surface (14) extends at least over the region (PA) penetrated by the pumping light (32) in a direction extending parallel to this surface.

52. Laser amplifying system as defined in claim 51, characterized in that the cooling surface (14) extends beyond the region (PA) penetrated by the pumping light (32) in a direction extending parallel to this surface.

53. Laser amplifying system as defined in any of claims 50 to 52, characterized in that the solid body (12) is attemperatable in a region (AB, AR) lying outside the cooling surface (14).

54. Laser amplifying system as defined in claim 53, characterized in that the solid body (12) is attemperatable in its region (AB, AR) lying outside the cooling surface (14) to a temperature reducing a temperature gradient parallel to the cooling surface (14) or to the surface (22) parallel thereto.

55. Laser amplifying system as defined in claim 53 or 54, characterized in that the solid body (12) is attemperatable in a region (AB, AR) lying outside the cooling surface (14) to a temperature above the temperature of the cooling surface (14).

56. Laser amplifying system as defined in any of claims 53 to 55, characterized in that the solid body (12) is heatable in a region (AB, AR) lying outside the cooling surface (14).

## Revendications

1. Système amplificateur laser comportant un corps solide disposé dans un champ de rayonnement d'un laser et qui comprend un matériau actif pour l'effet laser, et une source de lumière de pompage pour pomper un matériau actif pour l'effet laser, caractérisé en ce que le corps solide (12,212,312,412) possède une surface de refroidissement (14,214,314,414), que le corps solide (12,212,312,412) évacue par une certaine surface sur un élément de refroidissement massif (20,220,320,420), par la surface de refroidissement (14,214,314,414), une chaleur qui apparaît dans ce corps solide de sorte qu'il apparaît dans le corps solide (12,212,312,412) un gradient de température en direction (42) de la surface de refroidissement (14,214,314,414), que l'élément massif de refroidissement (20,220,320,420) forme un support pour le corps solide (12,212,312,412) et que le champ de rayonnement laser (24,224,324,424) se propage approximativement parallèlement au gradient de température dans le corps solide (12,212,312,412).

2. Système amplificateur laser selon la revendication 1, caractérisé en ce que l'élément de refroidissement (20,220,32,420) est réalisé en un matériau possédant une conductibilité thermique, qui est supérieure à la conductibilité thermique du corps solide (12,212,312,412).

3. Système amplificateur laser selon la revendication 1 ou 2, caractérisé en ce que l'élément de refroidissement (20,220,320,420) possède dans une partie jouxtant le corps solide (12,212,312,412), perpendiculairement à la surface de refroidissement (14,214,314,414), une épaisseur qui est supérieure au quotient de l'aire de la surface de refroidissement (14,214,314,414) divisé par sa circonférence (AU).

4. Système amplificateur laser selon l'une des revendications précédentes, caractérisé en ce que l'élément de refroidissement (20,220,320,420) comprend une surface porteuse (49) pour le corps solide (12,212,312,412), qui est supérieure à la surface de refroidissement (14,214,314, 414).

5. Système amplificateur laser selon l'une des revendications précédentes, caractérisé en ce que la surface de refroidissement (14,214,314,414) possède dans une première direction (40) une dimension qui est supérieure à une épaisseur (D) du corps solide (12,212,312,412), mesurée perpendiculairement à la surface de refroidissement (14,214,314,414).

6. Système amplificateur laser selon la revendication 5, caractérisé en ce que le corps solide (12,212, 312,412) est agencé sous la forme de plaquette et s'applique par au moins une surface supérieure ou une surface inférieure de plaquette en tant que surface de refroidissement (14,214,314,414) sur l'élément de refroidissement (20, 220,320,420).

7. Système amplificateur laser selon l'une des revendications précédentes, caractérisé en ce que le corps solide (12,212,312,412) évacue la chaleur, qui apparaît dans ce corps, à partir de et sur toute la surface de refroidissement (14,214,314,414) sur l'élément de refroidissement (20,220,320,420).

8. Système amplificateur laser selon l'une des revendications précédentes, caractérisé en ce que l'élément de refroidissement (20,220,320,420) possède une surface d'évacuation de chaleur (50,52,68), avec laquelle le fluide de refroidissement est en contact et qui est égale à un multiple de l'aire de la surface de refroidissement (14,214,314,414).

9. Système amplificateur laser selon l'une des revendications précédentes, caractérisé en ce que l'élément de refroidissement (120,420) pour le champ de rayonnement laser (24,414) est agencé de manière à être transparent.

10. Système amplificateur laser selon la revendication 9, caractérisé en ce que l'élément de refroidissement (120,420) et le corps solide (12,412) sont traversés par le champ de rayonnement laser (24,124) dans une direction (42) transversale par rapport à la surface de refroidissement (14,414).

11. Système amplificateur laser selon la revendication 9 ou 10, caractérisé en ce que le champ de rayonnement laser (424) traverse une multiplicité de corps solides successifs (412) et qu'un élément de refroidissement (420) est disposé respectivement entre les corps solides successifs (412).

12. Système amplificateur laser selon l'une des revendications précédentes, caractérisé en ce qu'un réflecteur (16,316) pour le champ de rayonnement laser (24,324) est disposé sur le côté du corps solide (12), sur lequel ce dernier porte la surface de refroidissement (14,314).

13. Système amplificateur laser selon la revendication 12, caractérisé en ce que le corps solide (12, 312) s'applique, par la surface de refroidissement (14,314) et sur toute sa surface à la surface du réflecteur (16, 316) pour le champ de rayonnement laser (24,324).

14. Système amplificateur laser selon la revendication 13, caractérisé en ce qu'une introduction de chaleur par une certaine surface dans un corps de refroidissement (18, 318) de l'élément de refroidissement (20,320) s'effectue par l'intermédiaire du réflecteur (16,316).

15. Système amplificateur laser selon l'une des revendications 13 ou 14, caractérisé en ce que le réflecteur (16,316) est une couche réfléchissante portée par la surface de refroidissement (14,314).

16. Système amplificateur laser selon l'une des revendications 12 à 15, caractérisé en ce que le champ de rayonnement laser (24,324) pénètre dans le corps solide à partir d'une surface (22,322) du corps solide (12,312), située à l'opposé de la surface de refroidissement (14,314).

17. Système amplificateur laser selon l'une des revendications précédentes, caractérisé en ce que le corps solide (12, 312, 412) possède une surface latérale (30, 330, 430) qui s'étend transversalement par rapport à ladite surface de refroidissement (14,314,414) et par laquelle est exécutée l'injection par couplage de la lumière de pompage 532,332,432).

18. Système amplificateur laser selon l'une des revendications précédentes, caractérisé en ce que la lumière de pompage (32,332,432) est guidée par réflexion dans le corps solide (12,312,412).

19. Système amplificateur laser selon la revendication 18, caractérisé en ce que la lumière de pompage (32,332,432) est guidée dans le corps solide (12, 312, 412) approximativement parallèle à la surface de refroidissement (14,314,414).

20. Système amplificateur laser selon la revendication 19, caractérisé en ce que la lumière de pompage (32,332,432) est guidée dans le corps solide (12,312,412) par la surface de refroidissement (14,314,414) et une surface (22,322,422) située à l'opposé de la surface de refroidissement.

21. Système amplificateur laser selon l'une des revendications 18 à 20, caractérisé en ce que la lumière de pompage (32,332,432) est guidée dans le corps solide (12,312,412) par réflexion totale.

22. Système amplificateur laser selon la revendication 21, caractérisé en ce que la divergence de la lumière de pompage (32,332,432) dans le corps solide (12, 312,412) est suffisamment élevée pour que la lumière de pompage (32,332,432) rencontre, en faisant un angle proche de l'angle limite de réflexion totale, les surfaces (14,314,414; 22,322,422) du corps solide (12,312,412), qui guident cette lumière.

23. Système amplificateur laser selon l'une des revendications précédentes, caractérisé en ce que l'injection par couplage de la lumière de pompage (32) s'effectue par une surface (22) située à l'opposé de la surface de refroidissement (14).

24. Système amplificateur laser selon la revendication 23, caractérisé en ce que sur le côté du corps solide (12), sur lequel est située la surface de refroidissement (14), est prévu un réflecteur (16) pour la lumière de pompage (32).

25. Système amplificateur laser selon la revendication 24, caractérisé en ce que le réflecteur (16) pour le champ de rayonnement (24) et le réflecteur (16) pour la lumière de pompage (32) sont identiques.

26. Système amplificateur laser selon l'une des revendications 24 ou 25, caractérisé en ce que la lumière de pompage (32) traverse au moins deux fois le corps solide (12).

27. Système amplificateur laser selon la revendication 26, caractérisé en ce que le faisceau de lumière de pompage (198) réfléchi par le réflecteur (16) est à nouveau. réfléchi par un miroir (202) dans le corps solide (12) en direction du réflecteur (16).

28. Système amplificateur laser selon l'une des revendications 12 à 27, caractérisé en ce que le réflecteur (16,316) est formé par une couche très réfléchissante déposée directement sur la surface de refroidissement (14,314) du corps solide (12,312).

29. Système amplificateur laser selon la revendication 28, caractérisé en ce qu'une métallisation (46) est déposée sur la face de la couche réfléchissante (16,316), tournée à l'opposé du corps solide (12,312).

30. Système amplificateur laser selon la revendication 29, caractérisé en ce que la métallisation (46) est reliée par un contact thermique d'une certaine surface au corps de refroidissement (18).

31. Système amplificateur laser selon la revendication 29 ou 30, caractérisé en ce que la métallisation (46) est reliée au corps de refroidissement (18) à l'aide d'un métal mou (48).

32. Système amplificateur laser selon l'une des revendications précédentes, caractérisé en ce que le système amplificateur laser est réalisé sans résonateur pour un champ de rayonnement laser dans des plans (72) parallèles à la surface de refroidissement (49).

33. Système amplificateur laser selon la revendication 32, caractérisé en ce qu'un matériau (210) réalisant une adaptation de l'indice de réfraction est prévu dans une position jouxtant les surfaces latérales (30,330).

34. Système amplificateur laser selon la revendication 33, caractérisé en ce que le corps solide (312) possède une partie intérieure (360), qui comporte le matériau actif pour l'effet laser, et une partie extérieure (362) exempte du matériau actif pour l'effet laser.

35. Système amplificateur laser selon la revendication 34, caractérisé en ce que la partie extérieure (362) possède un matériau ayant le même indice de réfraction que la partie intérieure (360).

36. Système amplificateur laser selon la revendication 34 ou 35, caractérisé en ce que la partie extérieure (362) et la partie intérieure (360) sont réunies l'une à l'autre par collage.

37. Système amplificateur laser selon l'une des revendications précédentes, caractérisé en ce que la source de lumière de pompage (34) comprend une ou plusieurs diodes de rayonnement laser ou diodes de super-rayonnement.

38. Système amplificateur laser selon la revendication 37, caractérisé en ce que la lumière de pompage (32,332,432) de la diode de rayonnement laser ou de la diode de super-rayonnement (34) est guidée par un guide de lumière (70) jusqu'au corps solide (12,312,412).

39. Système amplificateur laser selon l'une des revendications précédentes, caractérisé en ce que la surface (22,30,330,430), traversée par la lumière de pompage (32,332,432), du corps solide (12,312,412) est pourvue d'un revêtement antiréfléchissant (38).

40. Système amplificateur laser selon l'une des revendications précédentes, caractérisé en ce que la surface (22,322,422), traversée par le champ de rayonnement laser (24,324,424), du corps solide (12,312,412) est pourvue d'un revêtement antiréfléchissant (36).

41. Système amplificateur laser selon l'une des revendications précédentes, caractérisé en ce que le champ de rayonnement laser (24,424) traverse plusieurs des corps solides (12,412) selon l'invention.

42. Système amplificateur laser selon la revendication 41, caractérisé en ce que dans le système amplificateur laser le champ de rayonnement laser (24) est soumis à plusieurs réflexions et qu'un corps solide (12) est disposé dans la partie de plusieurs de ces réflexions.

43. Système amplificateur laser selon la revendication 42, caractérisé en ce que les réflexions s'effectuent respectivement au niveau d'un réflecteur (16), qui est compris par l'élément de refroidissement (20) pour le corps solide respectif (12).

44. Système amplificateur laser selon l'une des revendications précédentes, caractérisé en ce que le système est combiné à un résonateur (28) pour former un système laser.

45. Système amplificateur laser selon l'une des revendications précédentes, caractérisé en ce que le gradient de température dans le corps solide (12) est essentiellement constant dans la partie traversée par le champ de rayonnement laser (24), transversalement par rapport à la direction de propagation du champ de rayonnement laser (24).

46. Système amplificateur laser selon l'une des revendications précédentes, caractérisé en ce que le gradient de température dans le corps solide (12) est essentiellement constant dans la partie (PA) traversée par la lumière de pompage (32), transversalement par rapport à la direction de propagation du champ de rayonnement laser (24).

47. Système amplificateur laser selon l'une des revendications précédentes, caractérisé en ce que le corps solide (12) possède des isothermes (I') qui s'étendent en direction de la surface de refroidissement (14) et de la surface (22) située à l'opposé de la surface de refroidissement (14).

48. Système amplificateur laser selon la revendication 47, caractérisé en ce que l'allure des isothermes (I') à l'extérieur d'une partie (PA) traversée par la lumière de pompage (32) possède un gradient proche de la surface et qui s'étend parallèlement à la surface de refroidissement (14) et à proximité de cette dernière et qui a un ordre de grandeur comparable à un gradient proche de la surface, qui s'étend parallèlement à la surface (22), située à l'opposé de la surface de refroidissement (14) et s'étend à proximité de cette surface (22).

49. Système amplificateur laser selon la revendication 48, caractérisé en ce que les deux gradients proches des surfaces ont des quantités essentiellement comparables.

50. Système amplificateur laser selon l'une des revendications précédentes, caractérisé en ce que le corps solide (12) s'étend dans une direction parallèle à la surface de refroidissement (14), au moyen d'une partie extérieure (AB) située au-delà de cette surface.

51. Système amplificateur laser selon l'une des revendications précédentes, caractérisé en ce que la surface de refroidissement (14) s'étend dans une direction, qui est parallèle à cette surface, au moins au-delà de la partie (PA) traversée par la lumière de pompage (32).

52. Système amplificateur laser selon la revendication 51, caractérisé en ce que la surface de refroidissement (14) s'étend dans une direction parallèle à cette surface, au-delà de la partie (PA) traversée par la lumière de pompage (32).

53. système amplificateur laser selon l'une des revendications 50 à 52, caractérisé en ce que le corps solide (12) peut être tempéré dans des parties (AB,AR) situées a l'extérieur de la surface de refroidissement (14).

54. Système amplificateur laser selon la revendication 53, caractérisé en ce que le corps solide (12) peut être tempéré dans sa partie (AB,AR) située à l'extérieur de la surface de refroidissement (14), à une température qui réduit un gradient de température parallèlement à la surface de refroidissement (14) ou à la surface (22) parallèle à cette surface.

55. Système amplificateur laser selon la revendication 53 ou 54, caractérisé en ce que le corps solide (12) peut être tempéré, dans une partie (AB,AR) située à l'extérieur de la surface de refroidissement (14), à une température supérieure à la température de la surface de refroidissement (14).

56. Système amplificateur laser selon l'une des revendications 53 à 55, caractérisé en ce que le corps solide (12) peut être chauffé dans une partie (AB,AR) située à l'extérieur de la surface de refroidissement (14).
